# EUROPEAN PATENT SPECIFICATION

(11) **EP 0 050 911 B1**
(45) Date of publication and mention of the grant of the patent: **31.10.1984**
(21) Application number: 81302650.7
(22) Date of filing: 15.06.1981
(51) Int. Cl.: B01J 29/06, C10G 47/20

(54) **Catalyst and process for the hydrodenitrogenation and hydrocracking of high-nitrogen feeds**
Katalysator und Verfahren zur Hydrodenitrifizierung und Hydrokrackung stickstoffreicher Beschickungen
Catalyseur et procédé pour l'hydrodénitrification et l'hydrocraquage de charges riches en azote

(30) Priority: 24.10.1980 US 200536
(43) Date of publication of application: 05.05.1982
(73) Proprietor: Standard Oil Company, Chicago Illinois 60601 (US)
(72) Inventor: Tait, Andrew Martin, Naperville Illinois 60540 (US); Newitt, Thomas Dickey, Naperville Illinois 60540 (US); Hensley, Albert Lloyd, Jr, Munster Indiana 46321 (US)
(74) Representative: Laredo, Jack Joseph

## Description

### Background of the invention

This invention is related to the catalytic hydro-treatment of a feedstock containing large concentrations of nitrogen compounds in the presence of hydrogen to hydrocrack said feedstock and to remove nitrogen compounds therefrom.

A co-pending and concurrently filed application, EPA 0050912, discloses the hydrotreating of nitrogen-containing feeds in the presence of a catciyst comprising a hydrogenation component comprising chromium, molybdenum, and at least one metal of Group VIII and an alumina-silica support, which support contains silica in an amount within the range of about 10 wt% to about 50 wt%, based upon the weight of the catalyst support.

In United States Patent 2,971,904, Gladrow, et al., disclose various processes, such as hydroforming, cracking, and hydroisomerization, which processes employ a catalyst comprising a hydrogenation component, such as molybdenum, chromium, tungsten, vanadium, platinum group metals, nickel, copper, cobalt, cobalt molybdate, and mixtures thereof, deposited upon a zeolitic crystalline alumino-silicate molecular sieve.

In United States Patent 3,236,761, Rabo, et al., consider processes for cracking, hydrocracking, polymerization, alkylation, dealkylation, reforming, and isomerization of hydrocarbons, which processes employ a zeolitic molecular sieve catalyst. The zeolitic molecular sieve has less than 90 percent of the aluminum atoms associated with cations and is identified as a decationized zeolitic molecular sieve. The silicon dioxide to aluminum trioxide molar ratio of this molecular sieve is greater than 3. While the preferred metals are palladium and platinum, other catalytically active metals, such as titanium, chromium, molybdenum, tungsten, rhenium, manganese, zinc, and vanadium can be introduced into the crystalline aluminosilicate by any method.

In United States Patent 3,236,762, Rabo, et al., disclose a process for the conversion of hydrocarbons, which process comprises contacting the hydrocarbons with a zeolitic molecular sieve having at least 40 percent of the aluminum tetrahedra satisfied by the presence of polyvalent metal cations. Metals such as palladium, platinum, titanium, chromium, molybdenum, tungsten, rhenium, manganese, zinc, and vanadium can be introduced into the crystalline aluminosilicate by any method which will result in dispersing the catalytically active metal. This patent discloses processes for isomerization, reforming, hydrocracking, alkylation, and dealkylation.

In United States Patent 2,882,244, Milton discloses X-type crystalline zeolitic molecular sieves.

In United States Patent 2,962,435, Fleck, et al., disclose the improved conversion of feedstocks that are contaminated with certain organic nitrogen compounds by employing a catalyst comprising a synthetic zeolitic metallo aluminosolicate which has been activated by partial dehydration. Such aluminosilicate has pores of at least 7A (0.7 nm) in diameter. Such process and catalyst are particularly useful for the catalytic cracking of hydrocarbon mixtures containing certain organic nitrogen compounds.

In United States Patent 3,130,006, Rabo, et al., disclose a decationized zeolitic molecular sieve having a silicon dioxide to aluminum trioxide molar ratio greater than 3.0 and a pore size that is sufficient to absorb benzene, and a metal-cation-to-aluminum atomic ratio of less than 0.9, less than 90 percent of the aluminum atoms being associated with cations. Examples of such zeolites are faujasite, Y-type, and L-type molecular sieves.

In United States Patent 3,130,007, Breck discloses crystalline zeolite Y. This molecular sieve has a silicon dioxide to aluminum trioxide molar ratio that is greater than 3 and up to about 6.

In United States Patent 3,013,988, Bukata, et al., disclose zeolitic molecular sieves containing at least one metal selected from the group consisting of chromium, molybdenum and tungsten, or oxides of these metals. The crystalline metal aluminosilicate zeolite can be a zeolite X, zeolite Y, or faujasite.

In United States Patent 3,140,322, Frilette, et al., disclose a process for selectively conducting an organic chemical reaction, which process employs a crystalline aluminosilicate zeolite molecular sieve material of the X-type and A-type. The sodium or calcium ions of the zeolite may be replaced by such metal ions as lithium, magnesium, potassium, silver, strontium, nickel, cobalt, iron, zinc, mercury, cadmium, gold, scandium, titanium, vanadium, chromium, manganese, tungsten, yttrium, zirconium, niobium, molybdenum, halfnium, tantalum, aluminum, and other ions, such as ammonium and hydrogen ions. This patent teaches general methods for converting chemical substances catalytically under conditions which impose selectivity of reaction paths by virtue of providing catalytically active sites within crystalline substances, the interstitial dimensions of which will selectively pass or reject certain molecules. Examples of such reactions are dehydration of normal butanol, cracking of normal paraffins, and hydrogenation of double-bond or aromatic bond units.

In United Kingdom Patent Specification 731,638, there is disclosed a method for preparing a reforming catalyst, which catalyst consists of a major proportion of alumina (50 wt% to 89 wt%), a minor proportion of chromia (10 wt% to 30 wt%), and a minor proportion of molybdena (1 wt% to 20 wt%). This United Kingdom patent teaches that such a catalyst provides improved selectivity, activity, and stability for the reforming of hydrocarbon streams.

In United States Patent 4,188,284, Quick, et al, disclose a process for the hydrotreating of a heavy hydrocarbon stream wherein said stream is contacted under suitable conditions and in the presence of hydrogen with a catalyst comprising a hydrogenating component consisting essentially of (1) molybdenum and chromium, (2) their oxides, (3) their sulfides, or (4) mixtures thereof on a large-pore, catalytically active alumina, said molybdenum being present within the range of 5 wt% to 15 wt%, calculated as Mo03 and based upon the total catalyst weight, said chromium being present in an amount within the range of 5 wt% to 20 wt%, calculated as Cr₂0₃ and based upon the total catalyst weight, and said catalyst having a pore volume within the range of 0.4 cc/gm to 0.8 cc/gm, a surface area within the range of 150 m²/gm to 300 m²/gm, and an average pore diameter within the range of 100 A to 200 A (10 to 20 nm).

In United States Patent 4,181,602, Quick, et al, disclose a process for the hydrotreating of a heavy hydrocarbon stream wherein said stream is contacted under suitable conditions and in the presence of hydrogen with a catalyst comprising (1) the metals of molybdenum, chromium, and cobalt, (2) their oxides, (3) their sulfides, or (4) mixtures thereof on a large-pore, catalytically active alumina, said molybdenum being present in an amount within the range of 5 wt% to 15 wt%, calculated as Mo03 and based upon the total catalyst weight, said chromium being present in an amount within the range of 5 wt% to 20 wt%, calculated as Cr₂0₃ and based upon the total catalyst weight, said cobalt being present in an amount within the range of 0.1 wt% to 5 wt%, calculated as CoO and based upon the total catalyst weight, and said catalyst possessing a pore volume within the range of 0.4 cc/gm to 0.8 cc/gm, a surface area within the range of 150 m²/gm to 300 m²/gm, and an average pore diameter within the range of 100 A to 200 A (10-20 nm).

In United States Patent 4,191,635, Quick, et al, disclose a process for the hydrotreating and cracking of a heavy hydrocarbon stream containing metals, asphaltenes, nitrogen compounds, and sulfur compounds, which process comprises hydrotreating the stream in the presence of a catalyst comprising molybdenum and chromium, and optionally cobalt, on a large-pore alumina to provide a hydrotreated product and catalytically cracking at least a portion of the hydrotreated product.

In United States Patent 4,153,540, Gorring, et al, disclose a process for the treating of shale oil, wherein the shale oil is first hydrotreated to convert sulfur, nitrogen, and oxygen derivatives to hydrogen sulfides, ammonia, and water and the hydrotreated material is hydrocracked over a catalyst comprising a zeolite such as HZSM-5 and a hydrogenation/dehydrogenation metal.

In United States Patent 4,224,144, Hensley, Jr., et al., disclose the hydrotreating of a hydrocarbon stream to remove nitrogen and sulfur therefrom, which stream is selected from petroleum hydrocarbon distillates, tar sands distillates, and shale oil. The catalyst employed in this hydrotreating process is a catalyst comprising a hydrogenation component comprising chromium, molybdenum, and a Group VIII metal deposited upon a porous refractory inorganic oxide support or carrier, such as alumina, silica-alumina, silica, magnesia, zirconia, and similar material.

U.S. Patent 4,008,149, ltoh, et al., is directed to a hydrorefining supported catalyst having a specific pore size distribution and to its use for the hydrorefining of distillates and residual oils, particularly the hydrodesulfurization of residual oils. The patent specifically mentions in column 7, at lines 6 through 42, atmospheric residual oils, vacuum residual oils, vacuum gas oils, and heavy cracked oils. The ltoh, et al., patent provides for an alumina or alumina-containing carrier having a silica content of 5 to 25 wt% and indicates that the term "alumina-containing carrier" contemplates compositions obtained by incorporating into alumina one or more other refractory inorganic oxide carrier substances, including crystalline zeolites, preferably from about 1 to 10 wt%, based on the alumina or alumina-silica. The patent also teaches that one or more metals selected from metals of Groups VI and VIII of the Periodic Table are employed as the metal component of the catalyst. The patent does not specifically mention any combination of metals that includes two metals from Group VI of the Periodic Table. In column 5, at lines 36 to 38, combinations of metals listed are molybdenum-cobalt, molybdenum-nickel, tungsten-nickel, molybdenum-cobalt-nickel, and tungsten-cobalt-nickel. The Itoh, et al., patent does not disclose a process for the hydrodenitrogenation and hydrocracking of a hydrocarbon stream, which process employs a catalyst containing a hydrogenation component comprising both chromium and molybdenum, two metals of Group VI of the Periodic Table. Rather, it teaches away from such a disclosure, since the only combinations of metals that are used in the hydrogenation component of the catalyst disclosed therein contain one metal of Group VI combined with one metal of Group VIII, e.g., molybdenum-cobalt, or one metal of Group VI combined with two metals of Group VIII, e.g., molybdenum-cobalt-nickel. While it does suggest that the catalyst can contain some molecular sieve material, preferably from 1 to 10 wt%, it provides that such amount of crystalline zeolites can be used with an alumina or alumina-containing carrier having a silica content of 5 to 25% by weight. It does not disclose that the catalyst support can contain up to 90 wt% molecular sieve.

Now there has been found a catalyst which can be used to hydrodenitrogenate and hydrocrack successfully petroleum hydrocarbon distillates, liquids obtained from coal, liquids obtained from tar sands, and shale oil.

There is provided a catalytic composition and a process for the hydrodenitrogenation and hydrocracking of a hydrocarbon stream containing a substantial amount of nitrogen compounds, which process employs the aforesaid catalytic composition.

The catalyst comprises a hydrogenation component, a porous refractory inorganic oxide, and a crystalline molecular sieve zeolite, said hydrogenation component comprising chromium, molybdenum, and at least one Group VIII metal. The hydrogenation component can be deposited upon a support of the molecular sieve zeolite and refractory inorganic oxide. Alternatively, the hydrogenation component can be deposited upon the refractory inorganic oxide, which is physically mixed with the molecular sieve zeolite. A suitable molecular sieve zeolite is one having exchangeable cations and pore openings that are at least 5 Angstrom units (A) (0.5 nm). Consequently, a suitable molecular sieve material is a member selected from the group consisting of a faujasite-type crystalline alumino-silicate, a mordenite-type crystalline aluminosilicate, a ZSM5-type crystalline aluminosilicate, and an AMS-type crystalline metallosilicate. The molecular sieve zeolite is present in an amount within the range of 5 wt% to 90 wt%, based upon the weight of said support, and the metals of said hydrogenation component are present in the elemental form, as oxides, as sulfides, or as mixtures thereof. Typical examples of suitable molecular sieves are ultrastable, large-pore crystalline aluminosilicate material, a crystalline Y-type aluminosilicate, a ZSM-5 crystalline aluminosilicate, and an AMS-1 B crystalline borosilicate.

The process comprises contacting a hydrocarbon stream containing a substantial amount of nitrogen under hydrotreating conditions and in the presence of hydrogen with the aforesaid catalyst.

### Detailed description of the invention

The present invention is directed to a novel catalyst and to a novel process employing that catalyst, which process is a process for the hydrodenitrogenation and hydrocracking of a hydrocarbon stream containing a substantial amount of nitrogen compounds.

The catalyst and the process of the present invention can be used conveniently to treat a hydrocarbon stream containing a substantial amount of nitrogen compounds. The phrase "containing a substantial amount of nitrogen compounds" refers to an amount that will result in at least 0.2 wt% nitrogen in the particular stream. Such hydrocarbon streams are selected from the group consisting of petroleum hydrocarbon distillates, liquids derived from coal, liquids derived from tar sands, and shale oil. Typical examples of petroleum hydrocarbon distillates are light virgin gas oils, heavy vacuum gas oils, heavy coker gas oils, and full range gas oils. Hydrocarbon streams derived from oil shale can be a whole shale oil or any fraction thereof. Such feedstocks often contain from 0.2 wt% nitrogen to 3.0 wt% nitrogen, or more.

Such hydrocarbon feeds contain substantial quantities of nitrogen compounds ac.-' such nitrogen compounds must be removed therefrom before the hydrocarbons can be used for fuels. One way of removing such nitrogen compounds comprises the hydrodenitrogenating of the hydrocarbon stream in the presence of hydrogen, under suitable conditions, and in the presence of a suitable catalyst.

While the catalyst and process of the present invention can be used to treat a hydrocarbon stream containing a substantial amount of nitrogen compounds, they can be used also to treat a hydrocarbon stream that contains less than 0.2 wt% nitrogen.

Broadly, there is provided a catalyst which comprises a hydrogenation component comprising chromium, molybdenum, and at least one Group VIII metal, a crystalline molecular sieve zeolite having a pore diameter of at least 5 A (0.5 nm) and containing exchangeable cations, and a porous refractory inorganic oxide, the metals of said hydrogenation component being present in the elemental form, as oxides, as sulfides, or mixtures thereof. In one embodiment, there is provided a catalyst which comprises a hydrogenation component comprising chromium, molybdenum, and at least one Group VIII metal deposited upon a porous support comprising a crystalline molecular sieve zeolite having a pore diameter of at least 5 A (0.5 nm) and containing exchangeable cations suspended in and distributed throughout a matrix of a refractory inorganic oxide, the metals of said hydrogenation component being present in the elemental form, as oxides, as sulfides, or mixtures thereof. In another embodiment, there is provided a catalyst which comprises a hydrogenation component comprising chromium, molybdenum, and at least one Group VIII metal deposited upon a refractory inorganic oxide that is intimately admixed in a physical particulate mixture with a crystalline molecular sieve zeolite having a pore diameter of at least 5 A (0.5 nm) and containing exchangeable cations, the metals of said hydrogenation component being present in the elemental form, as oxides, as sulfides, or mixtures thereof.

More particularly, there is provided a catalyst which comprises a hydrogenation component comprising chromium, molybdenum, and at least one Group VIII metaldeposited upon a porous support comprising a crystalline molecular sieve zeolite selected from the group consisting of a faujasite-type crystalline aluminosilicate, a mordenite-type crystalline aluminosilicate, a ZSM-5-type crystalline aluminosilicate, and an AMS-type crystalline metallosilicate suspended in and distributed throughout a matrix of a refractory inorganic oxide support material, the metals of said hydrogenation component being present in the elemental form, as oxides, as sulfides, or mixtures thereof. In addition, there is provided a catalyst which comprises a hydrogenation component comprising chromium, molybdenum, and at least one Group VIII metal deposited upon a porous support comprising a crystalline molecular sieve zeolite selected from the group consisting of ultrastable, large-pore crystalline aluminosilicate material, a rare earth metal-exchanged Y-type aluminosilicate, a ZSM-5 crystalline aluminosilicate, and an AMS-1 B crystalline borosilicate suspended in and distributed throughout a matrix of a refractory inorganic oxide support material, the metals of said hydrogenation component being present in the elemental form, as oxides, as sulfides, or mixtures thereof.

There is also provided a process for the hydrodenitrogenation and hydrocracking of a hydrocarbon stream containing a substantial amount of nitrogen compounds, which process comprises contacting said stream in a reaction zone under suitable conditions and in the presence of hydrogen with a catalyst comprising a hydrogenation component comprising chromium, molybdenum, and at least one Group VIII metal, a crystalline molecular sieve zeolite having a pore diameter of at least 5 A (0.5 nm) and containing exchangeable cations, and a porous refractory inorganic oxide, the metals of said hydrogenation component being present in the elemental form, as oxides, as sulfides, or mixtures thereof. In one embodiment, there is provided a process for the hydrodenitrogenation and hydrocracking of a hydrocarbon stream containing a substantial amount of nitrogen compounds, which process comprises contacting said stream in a reaction zone under suitable conditions and in the presence of hydrogen with a catalyst comprising a hydrogenation component comprising chromium, molybdenum, and at least one Group VIII metal deposited upon a porous support comprising a crystalline molecular sieve zeolite having a pore diameter of at least 5 A (0.5 nm) and containing exchangeable cations suspended in and distributed throughout a matrix of a refractory inorganic oxide support material, the metals of said hydrogenation component being present in the elemental form, as oxides, as sulfides, or mixtures thereof. In another embodiment, there is provided a process for the hydrodenitrogenation and hydrocracking of a hydrocarbon stream containing a substantial amount of nitrogen compounds, which process comprises contacting said stream in a reaction zone under suitable conditions and in the presence of hydrogen with a catalyst comprising a hydrogenation component comprising chromium, molybdenum, and at least one Group VIII metal deposited upon a refractory inorganic oxide that is intimately admixed in a physical particulate mixture with a crystalline molecular sieve zeolite having a pore diameter of at least 5 A (0.5 nm) and containing exchangeable cations, the metals of said hydrogenation component being present in the elemental form, as oxides, as sulfides, or mixtures thereof.

More particularly, there is provided a process for the hydrodenitrogenation and hydrocracking of a hydrocarbon stream containing a substantial amount of nitrogen compounds, which process comprises contacting said stream in a reaction zone under suitable conditions and in the presence of hydrogen with a catalyst comprising a hydrogenation component comprising chromium, molybdenum, and at least one Group VIII metal deposited upon a porous support comprising a crystalline molecular sieve zeolite selected from the group consisting of a faujasite-type crystalline aluminosilicate, a mordenite-type crystalline alumino-silicate, a ZSM 5-type crystalline aluminosilicate, and an AMS-type crystalline metallosilicate suspended in and distributed throughout a matrix of a refractory inorganic oxide support material, the metals of said hydrogenation component being present in the elemental form, as oxides, as sulfides, or mixtures thereof. In addition, there is provided a process for the hydrodenitrogenation and hydrocracking of a hydrocarbon stream containing a substantial amount of nitrogen compounds, which process comprises contacting said stream in a reaction zone under suitable conditions and in the presence of hydrogen with a catalyst comprising a hydrogenation component comprising chromium, molybdenum, and at least one Group VIII metal deposited upon a porous support comprising a crystalline molecular sieve zeolite selected from the group consisting of ultrastable, large-pore crystalline aluminosilicate material, a crystalline Y-type aluminosilicate, a rare earth metal-exchanged crystalline Y-type aluminosilicate, a ZSM-5 crystalline aluminosilicate, and an AMS-1 B crystalline borosilicate suspended in and distributed throughout a matrix of a refractory inorganic oxide support material, the metals of said hydrogenation component being present in the elemental form, as oxides, as sulfides, or mixtures thereof.

In addition, there is provided a process for the hydrodenitrogenation and hydrocracking of a hydrocarbon stream comprising whole shale oil or any fraction thereof to produce jet fuel components, which process comprises contacting said stream in a reaction zone under suitable conditions and in the presence of hydrogen with a catalyst comprising a hydrogenation component comprising chromium, molybdenum, and at least one Group VIII metal, a crystalline molecular sieve zeolite having a pore diameter of at least 5 A (0.5 nm) and containing exchangeable cations, and a porous refractory inorganic oxide, the metals of said hydrogenation component being present in the elemental form, as oxides, as sulfides, or mixtures thereof. In one embodiment, there is provided a process for the hydrodenitrogenation and hydrocracking of a hydrocarbon stream comprising whole shale oil or any fraction thereof to produce jet fuel components, which process comprises contacting said stream in a reaction zone under suitable conditions and in the presence of hydrogen with a catalyst comprising a hydrogenation component comprising chromium, molybdenum, and at least one Group VIII metal deposited upon a porous support comprising a crystalline molecular sieve zeolite having a pore diameter of at least 5 A (0.5 nm) and containing exchangeable cations suspended in and distributed throughout a matrix of a refractory inorganic oxide, the metals of said hydrogenation component being present in the elemental form, as oxides, as sulfides, or mixtures thereof. In another embodiment, there is provided a process for the hydrodenitrogenation and hydrocracking of a hydrocarbon stream comprising whole shale oil or any fraction thereof to produce jet fuel components, which process comprises contacting said stream in a reaction zone under suitable conditions and in the presence of hydrogen with a catalyst comprising a hydrogenation component comprising chromium, molybdenum, and at least one Group VIII metal deposited upon a refractory inorganic oxide that is intimately admixed in a physical particulate mixture with a crystalline molecular sieve zeolite having a pore diameter of at least 5 A (0.5 nm) and containing exchangeable cations, the metals of said hydrogenation component being present in the elemental form, as oxides, as sulfides, or mixtures thereof.

More particularly, there is provided a process for the hydrodenitrogenation and hydrocracking of a hydrocarbon stream comprising whole shale oil or any fraction thereof to produce jet fuel components, which process comprises contacting said stream in a reaction zone under suitable conditions and in the presence of hydrogen with a catalyst comprising a hydrogenation component comprising chromium, molybdenum, and at least one Group VIII metal deposited upon a support comprising a crystalline molecular sieve zeolite selected from the group consisting of a faujasite-type crystalline aluminosilicate, a mordenite-type crystalline aluminosilicate, a ZSM-5-type crystalline aluminosilicate, and an AMS-type crystalline metallosilicate suspended in and distributed throughout a matrix of a refractory inorganic oxide support material, the metals of said hydrogenation component being present in the elemental form, as oxides, as sulfides, or mixtures thereof. In addition, there is provided a process for the hydrodenitrogenation and hydrocracking of a hydrocarbon stream comprising whole shale oil or any fraction thereof to produce jet fuel components, which process comprises contacting said stream in a reaction zone under suitable conditions and in the presence of hydrogen with a catalyst comprising a hydrogenation component comprising chromium, molybdenum, and at least one Group VIII metal deposited upon a porous support comprising a crystalline molecular sieve zeolite selected from the group consisting of ultrastable, large-pore crystalline aluminosilicate material, a crystalline Y-type aluminosilicate, a rare earth metal-exchanged crystalline Y-type aluminosilicate, a ZSM-5 crystalline aluminosilicate, and an AMS-1 B crystalline borosilicate suspended in and distributed throughout a matrix of a refractory inorganic oxide support material, the metals of said hydrogenation component being present in the elemental form, as oxides, as sulfides, or mixtures thereof.

The catalyst of the present invention contains a hydrogenation component deposited upon a porous support comprising a molecular sieve zeolite and a refractory inorganic oxide or, alternatively, upon the refractory inorganic oxide. This hydrogenation component comprises chromium, molybdenum, and at least one Group VIII metal from the Periodic Table of Elements. The Periodic Table of Elements referred to herein is the table found on page 628 of Webster's Seventh New Collegiate Dictionary, G. & C. Merriam Company, Springfield, Massachusetts, U.S.A. (1963). The various metals of the hydrogenation component can be present in the elemental form, as oxides, as sulfides, or as mixtures thereof. The Group VIII metal is advantageously a non-noble metal and is preferably nickel or cobalt.

The catalyst contains the metal of Group VIII in an amount which falls within the range of 0.5 wt% to 10 wt%, calculated as the oxide of the metal, the molybdenum is present in an amount that falls within the range of 5 wt% to 25 wt%, calculated as Mo03, and the chromium in an amount that falls within the range of 3 wt% to 15 wt%, calculated as Cr_{z}0₃, each amount being based upon the weight of the catalyst. Preferably, the catalyst should contain the Group VIII metal, preferably cobalt or nickel, in an amount within the range of 1 wt% to 5 wt%, calculated as the oxide of the metal, molybdenum in an amount within the range of 12 wt% to 18 wt%, calculated as Mo03, and chromium in an amount within the range of 7 wt% to 12 wt%, calculated as Cr_{z}0₃, each amount being based upon the total weight of the catalyst.

An essential component of the support material of the catalyst of the present invention is a crystalline molecular sieve zeolite having a pore diameter of at least 5 A (0.5 nm) and containing exchangeable cations. Such molecular sieve zeolite can be selected from the group consisting of a faujasite-type crystalline aluminosilicate, a mordenite-type crystalline aluminosilicate, a ZSM-5-type crystaline aluminosilicate, and an AMS-type crystalline metallosilicate. Examples of faujasite-type crystalline aluminosilicate are high- and low-alkali metal Y-type crystalline aluminosilicates, metal-exchanged X-type and Y-type crystalline aluminosilicates, and ultrastable, large-pore crystalline aluminosilicate material. Zeolon is an example of a mordenite-type crystalline aluminosilicate. An example of a ZSM-5-type crystalline aluminosilicate is ZSM-5 crystalline aluminosilicate itself. AMS-1 B crystalline borosilicate is an example of an AMS-type crystalline metallosilicate. One or more of these molecular sieves are suspended in and distributed throughout a matrix of a refractory inorganic oxide material. The molecular sieve component is present in an amount within the range of 5 wt% to 90 wt%, preferably within the range of 20 wt% to 50 wt%, based upon the weight of the support of the catalyst, which support is made up of the molecular sieve material and the refractory inorganic oxide. Such concentrations of zeolite will provide suitable catalysis for upgrading feeds containing substantial amounts of nitrogen.

Ultrastable, large-pore crystalline aluminosilicate material is represented by Z-14US zeolites which are described in United States Patents 3,293,192 and 3,449,070.

By large-pore material is meant a material that has pores which are sufficiently large to permit the passage thereinto of benzene molecules and larger molecules and the passage therefrom of reaction products. For use in petroleum hydrocarbon conversion processes, it is often preferred to employ a large-pore molecular sieve material having a pore size of at least 7 A (0.7 nm) to 10 A (1 nm).

The ultrastable, large-pore crystalline aluminosilicate material is stable to exposure to elevated temperatures. This stability to elevated temperatures is discussed in the aforementioned United States Patents 3,293,192 and 3,449,070. It may be demonstrated by a surface area measurement after calcination at 1,725°F (940°C). In addition, the ultrastable, large-pore crystalline aluminosilicate material exhibits extremely good stability toward wetting, which is defined as the ability of a particular aluminosilicate material to retain surface area or nitrogen-adsorption capacity after contact with water or water vapor. A sodium form of the ultrastable, large-pore crystalline aluminosilicate material (2.15 wt% sodium) was shown to have a loss in nitrogen-adsorption capacity that is less than 2% per wetting, when tested for stability to wetting by subjecting the material to a number of consecutive cycles, each cycle consisting of a wetting and a drying.

The ultrastable, large-pore crystalline aluminosilicate material that is preferred for the catalytic composition of this invention exhibits a cubic unit cell dimension and hydroxyl infrared bands that distinguish it from other aluminosilicate materials. The cubic unit cell dimension of the preferred ultrastable, large-pore crystalline aluminosilicate is within the range of 24.20 Angstrom units (A) (242 nm) to 24.55 A (2.46 nm). The hydroxyl infrared bands obtained with the preferred ultrastable, large-pore crystalline aluminosilicate material are a band near 3,745 cm⁻¹ (3,745±5 cm⁻¹), a band near 3,695 cm⁻¹ (3,690±10 cm⁻¹), and a band near 3,625 cm⁻¹ (3,610±15 cm⁻¹). The band near 3,745 cm⁻¹ (3,690±10 cm⁻¹) may be found on many of the hydrogen-form and decationized aluminosilicate materials, but the band near 3,695 cm-¹ and the band near 3,625 cm-¹ are characteristic of the preferred ultrastable, large-pore crystalline aluminosilicate material that is used in the catalyst of the present invention.

The ultrastable, large-pore crystalline aluminosilicate material is characterized also by an alkaline metal content of less than 1%.

Other examples of crystalline molecular sieve zeolites that are suitable for the catalyst of the present invention are a high-sodium Y-type crystalline aluminosilicate such as the sodium-Y molecular sieve designated Catalyst Base 30-200 and obtained from the Linde Division of Union Carbide Corporation and a low-sodium Y-type molecular sieve designated as low-soda Diuturnal-Y-33-200 (Trade Mark) and obtained from the Linde Division of Union Carbide Corporation.

Another example of a crystalline molecular sieve zeolite that can be employed in the catalytic composition of the present invention is a metal-exchanged Y-type molecular sieve. Y-type zeolitic molecular sieves are discussed in United States Patent 3,130,007. The metal-exchanged Y-type molecular sieve can be prepared by replacing the original cation associated with the molecular sieve by a wide variety of other cations according to techniques that are known in the art. Ion exchange techniques have been disclosed in many patents, several of which are United States Patents 3,140,249, 3,140,251, and 3,140,253. Specifically, a mixture of rare earth metals can be exchanged into a Y-type zeolitic molecular sieve and such rare earth metal-exchanged Y-type molecular sieve can be employed suitably in the catalytic composition of the present invention. Specific examples of suitable rare earth metals are cerium, lanthanum, and praseodymium.

Another zeolitic molecular sieve material that is used in the catalytic composition of the present invention is ZSM-5 crystalline zeolitic molecular sieves. Descriptions of the ZSM-5 composition and its method of preparation are presented by Argauer, et al., in United States Patent 3,702,886.

As additional molecular sieve that can be used in the catalytic composition of the present invention is AMS-1 B crystalline borosilicate, which is described in a co-pending United States patent application, United States Serial No. 897,360 and in Belgian Patent 859,656.

A suitable AMS-1 B crystalline borosilicate is a molecular sieve material having the following composition in terms of mole ratios of oxides: 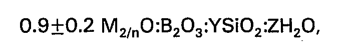 wherein M is at least one cation having a valence of n, Y is within the range of 4 to 600, and Z is within the range of 0 to 160, and providing an X-ray diffraction pattern comprising the following X-ray diffraction lines and assigned strengths:

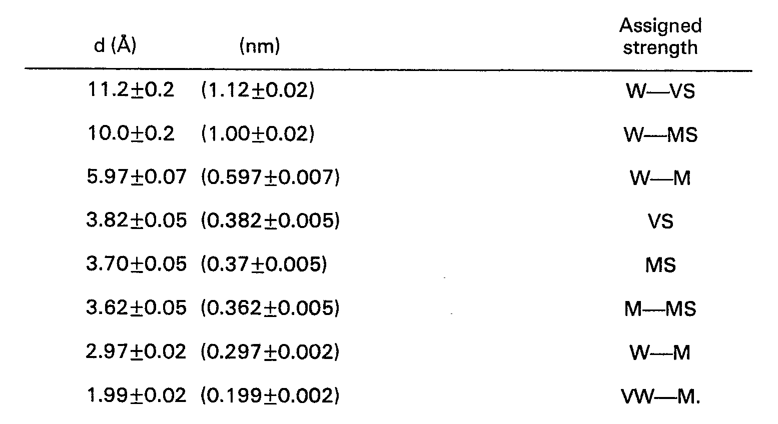

Mordenite-type crystalline aluminosilicates can be employed in the catalyst of the present invention. Mordenite-type crystalline aluminosilicate zeolites have been discussed, e.g., by Kimberlin in United States Patent 3,247,098, by Benesi, et al., in United States Patent 3,281,483, and by Adams, et al., in United States Patent 3,299,153. Synthetic mordenite-structure crystalline aluminosilicate zeolites, designated as Zeolon (Trade Mark), are available from the Norton Company of Worcester, Massachusetts, United States of America.

The other essential component of the support material of the catalyst of the present invention is a high-surface area inorganic oxide support, such as alumina, silica, or a mixture of silica and alumina. The mixtures of silica and alumina can include, but not be limited to, those compositions which are recognized by one having ordinary skill in the art as being a component of fluid cracking catalysts. Such silica-alumina material contains alumina, generally, within the range of 10 wt% to 45 wt%.

A preferred high-surface area refractory inorganic oxide is catalytically active alumina, such as gamma-alumina or eta-alumina. Such aluminas have a surface area within the range of 150 m²/gm to 350 m²/gm, or larger, a pore volume within the range of 0.3 cc/gm to 1 cc/gm, and an average pore diameter within the range of 60 A (6 nm) to 200 A (20 nm).

The catalytic composition of the present invention can be prepared by first making a support material comprising the particular crystalline zeolitic molecular sieve and matrix of a refractory inorganic oxide, such as alumina. This is done preferably by blending finely-divided crystaline molecular sieve in a sol, hydrosol, or hydrogel of the inorganic oxide, adding a gelling medium such as ammonium hydroxide to the blend with constant stirring to produce a gel, drying, pelleting or extruding, and calcining. Drying can be accomplished in static air at a temperature within the range of 80°F (27°C) to 350°C (177°C) for a period of time within the range of 1 hour to 50 hours. Calcination is performed conveniently by heating in air at a temperature in excess of 800°F (427°C) to 1,200°F (649°C) for a period within the range of 0.5 hour to 16 hours.

An alternative method for preparing the catalyst support comprises physically mixing finely-divided particles of the appropriate molecular sieve zeolite with finely-divided particles of the refractory inorganic oxide, thoroughly blending the mechanical mixture, and subsequently pelleting or extruding the blended mixture into appropriately-sized particles. If the hydrogenation component is to be solely upon the refractory inorganic oxide portion of the support material, the finely-divided particles of the appropriate molecular sieve zeolite can be physically admixed with finely-divided particles of the impregnated refractory inorganic oxide, and the mechanical mixture can be blended and subsequently pelleted or extruded into appropriately-sized particles.

The catalyst of the present invention can be used conveniently in a fixed bed in the form of pellets, spheres, or extrudates. It is contemplated further that the catalyst can be present as other shapes, such as a clover leaf, cross-shaped, or C-shaped, as disclosed by Hoekstra, et al., in United States Patents 3,674,680 and 3,764,565.

The hydrogenation component can then be incorporated onto the resultant support material by impregnation of the support with one or more solutions of heat-decomposable metal compounds, drying, and calcining as described hereinabove. If impregnation is to be performed with more than one solution, it is preferred that the solution containing the compound of chromium be applied first. However, it is to be understood that the metals can be applied in any order. In the case when the hydrogenation component is to be deposited upon the refractory inorganic oxide, one or more solutions of heat-decomposable metal compounds are employed to impregnate the particular refractory inorganic oxide with the various metals. Such impregnation can be followed by drying and calcining as described hereinabove. The impregnated refractory inorganic oxide material in a finely divided form can then be physically admixed with appropriately-sized particles of the selected molecular sieve zeolite.

The catalyst of the present invention is characterized by the following apparent pore size distribution, as would be obtained by a Digisorb 2500 (Trade Mark) instrument employing nitrogen desorption techniques: 30% to 55% of the total pore volume in pores having diameters less than 50 A (5 nm); 30% to 60% of the total pore volume in pores having diameters.within the range of 50 A (5 nm) to 100 A (10 nm); and less than 25% of the total pore volume in pores having diameters greater than 100 A (10 nm). The term "apparent pore size distribution" is used, since the large range of catalyst- support-composition values make it very difficult to fix ranges of values for the pore size distribution.

An advantage of the catalyst of the present invention is its high-temperature stability, i.e., its ability to perform satisfactorily at high temperatures over an extended period of time. The high temperature is an ideal condition, since it enables ammonia to be desorbed and permits hydrocracking to occur in the presence of ammonia. This ideal condition of high temperature does not appear to affect deleteriously the performance of the catalyst. The chromium in the hydrogenation component of the catalyst provides the high temperature stability. The combination of a group VIII metal and molybdenum affords an active component for hydrogenation, denitrogenation and desulfurization. The presence of a molecular sieve zeolite in the catalyst provides an acidic component which promotes denitrogenation and cracking. The presence of the refractory inorganic oxide affords a suitable high-surface area for the active component of the catalyst.

The acidity of the catalyst of the present invention can be enhanced by the addition of a halogen, for example, fluorine or chlorine.

Prior to use in the process of the present invention, the catalyst is subjected to a sulfiding pretreatment. This sulfiding pretreatment is necessary because the metal constituents of the hydrogenation component should be in a partially-reduced state. The sulfiding will provide such partially-reduced metals, but will not reduce the metals completely to the elemental form, which form is inactive.

A convenient sulfiding pretreatment comprises heating the catalyst to a temperature within the range of 250°F (121°C) to 350°F (177°C), passing a gas mixture of hydrogen sulfide in hydrogen over and through the catalyst at a variable pressure for a period of 0.5 hour to 2 hours, raising the temperature to a value within the range of 350°F (177°C) to 450°F (232°C), continuing to pass the gas mixture at this latter temperature over and through the catalyst for an additional period of 0.5 hour to 2 hours, raising the temperature to a value of 650°F (343°C) to 750°F (399°C), and continuing to pass the hydrogen sulfide-hydrogen gas mixture through the catalyst for an additional period of 0.5 hour to 2 hours. Suitably, sufficient gas should be employed to provide 110% of the stoichiometric amount of hydrogen sulfide needed to sulfide the metals of the hydrogenation component. The concentration of hydrogen sulfide in the gas is not critical. Subsequently, hydrogen-containing gas is introduced into the reactor and permitted to flow through the catalyst at operating pressure. A suitable flow rate for the hydrogen-containing gas is the hydrogen addition rate provided hereinbelow. The hydrocarbon feed to be treated by the process can then be introduced into the reactor.

While the above sulfiding pretreatment is a convenient way of pretreating the catalyst, other suitable methods known to those skilled in the art can be employed. For example, carbon disulfide can be added to the zone containing the catalyst or a light hydrocarbon oil containing sulfur can be passed over the catalyst for a time that is sufficient to provide the appropriate metal sulfides on the catalyst.

The operating conditions for the process of the present invention comprise a temperature within the range of 700°F (371 °C) to 800°F (427°C), a hydrogen partial pressure within the range of 1,000 psi (6,890 kPa) to 2,500 psi (17,225 kPa), a liquid hourly space velocity (LHSV) within the range of 0.1 volume of hydrocarbon per hour per volume of catalyst to 5 volumes of hydrocarbon per hour per volume of catalyst, a hydrogen addition rate or hydrogen recycle rate within the range of 2,000 standard cubic feet of hydrogen per barrel of hydrocarbon (SCFB) (359 m3/m3) to 20,000 SCFB (3,596 m³/m³), and a hydrogen-to-hydrocarbon molar ratio within the range of 3 moles of hydrogen per mole of hydrocarbon to 60 moles of hydrogen per mole of hydrocarbon. Preferably, the conditions comprise a temperature within the range of 740°F (393°C) to 790°F (416°C), a hydrogen partial pressure within the range of 1,600 psi (11,024 kPa) to 2,000 psi (13,780 kPa), an LSHV within the range of 0.3 volume of hydrocarbon per hour per volume of catalyst to 2 volumes of hydrocarbon per hour per volume of catalyst, a hydrogen addition rate or hydrogen recycle rate within the range of 6,000 SCFB (1,079 m³/m³) to 14,000 SCFB (2,517 m³/m³), and a hydrogen-to-hydrocarbon molar ratio within the range of 10 moles of hydrogen per mole of hydrocarbon to 30 moles of hydrogen per mole of hydrocarbon.

Since some of the feedstocks that can be treated by the process of the present invention will contain arsenic and other metals that are detrimental to the catalyst of the process of the present invention, a guard chamber can appropriately precede the reaction zone of the process of the present invention. This guard chamber can contain a porous refractory inorganic oxide or absorbent, such as a cheap or used catalyst. Such material should remove from the feedstock and retain efficiently such deleterious metals.

The following specific examples are being presented in order to facilitate the understanding of the present invention and are presented for the purposes of illustration only and are not intended to limit the scope of the present invention.

Seven catalysts were prepared and tested for their ability to hydrodenitrogenate and hydrocrack a whole shale oil that had been obtained from in situ retorting of oil shale by the Occidental Petroleum Corporation. Each of the seven catalysts and the test of that particular catalyst are presented in one of the following Examples I through VII, Example I being comparative.

### Example I

A catalyst, identified hereinafter as Catalyst A, was prepared.

A 147-gram portion of Aero (Trade Mark) 100A alumina, in the form of 1/16-inch (1.5 mm) extrudates, obtained from the American Cyanamid Company was calcined at a temperature of 1,000°F (538°C) for at least one hour. The calcined extrudes were then impregnated with a solution that had been prepared by dissolving 33.2 grams of (NH_{I})₂Cr₂o₇ in 145 milliliters of distilled water. After standing for a short time, the impregnated material was dried in an oven under a vacuum at a temperature of 212°F (100°C) overnight (approximately 16 hours). The resulting dried material was then calcined in static air at a temperature of 1,000°F (538°C) for 3 hours. The resulting material was impregnated with a solution that had been prepared by dissolving 11.65 grams of Co(NO₃)₂. 6H₂O and 36.8 grams of (NH₄)₆Mo₇O₂₄. 4H₂O in sufficient distilled water to obtain 120 milliliters of solution. The solid material and solution were permitted to stand for approximately 1 hour and then the solid material was placed in an oven under a vacuum and heated at a temperature of 212°F (100°C) for 2 hours and calcined subsequently overnight (approximately 16 hours) at a temperature of 1,000°F (538°C).

The calcined material was then ground and sized to a 14/20-mesh material, i.e., material that would pass through a 14-mesh screen (Tyler) (1.19 mm opening) but be retained upon a 20-mesh screen (Tyler) (0.841 mm opening). This catalyst, identified hereinafter as Catalyst A, was prepared to contain 1.5 wt% CoO, 10 wt% Cr_{z}0₃, and 15 wt% Mo03 on an alumina support.

Catalyst A was tested in an automated hydrotreating pilot plant. This bench-scale test unit had automatic controls for pressure, flow of reactants, and temperature. The reactor was made from 3/8- inch (9 mm) inside diameter, stainless steel, heavy-walled tubing. An 1/8-" (3 mm)-outside diameter thermowell extended up through the center of the reactor. The reactor was heated by an electrically heated steel block. The hydrocarbon feedstock was fed to the unit by means of a Ruska pump, a positive-displacement pump.

Catalyst A was loaded into a vertical reactor from the bottom up. The 14/20-mesh (1.19 mm/0.841 mm opening) material was supported on 8/10-mesh (2.38 mm/2.00 mm opening) Alundum (Trade Mark) particles, i.e., particles that would pass through an 8-mesh screen (Tyler) (2.38 mm opening), but retained upon a 10-mesh screen (Tyler) (2.00 mm opening). Approximately 20 cubic centimeters of catalyst were employed as the catalyst bed in this test, as well as in each of the tests discussed hereinafter, the amount being that required to provide an LHSV of 0.5 cubic centimeter of hydrocarbon per hour per cubic centimeter of catalyst. This amount of catalyst provided a length of catalyst bed of 10" (25 cm) to 12" (30 cm). A layer of 8/10-mesh (2.38 mm/2.00 mm opening) Alundum (Trade Mark) particles was placed over the catalyst to fill the top part of the reactor. The catalyst was located in the annular space between the thermowell and the internal wall of the 3/8" (9 mm)-inside diameter reactor.

After the catalyst was loaded into the reactor, it was subjected to the following sulfiding pretreatment. The temperature of the catalyst bed was raised to 300°F (149°C) and a gas mixture of 8% hydrogen sulfide in hydrogen was passed through the catalyst bed at a variable pressure. At the end of approximately 1 hour, the temperature was raised to 400°F (204°C) and the hydrogen sulfide- containing gas was passed over or through the catalyst for an additional hour. Then, the temperature was raised to 700°F (371 °C) and the hydrogen sulfide-hydrogen gas mixture was passed through the catalyst for an additional hour, at which time its flow was stopped. At least one standard cubic foot (28 I) of hydrogen-hydrogen sulfide gas, and preferably at least one standard cubic foot (28 I) per hour, had been passed through the catalyst bed. Hydrogen gas was then introduced into the reactor and allowed to flow through the catalyst bed at a pressure of 1,800 psi (12,402 kPa) and a flow rate of 15 liters per hour. The Ruska pump was started, the hydrocarbon bed was permitted to flow through the reactor, and the temperature of the catalyst bed was raised to the appropriate reaction temperature. Effluent from the reaction zone was passed into a gas-liquid high-pressure separator, wherein the gas was separated from the liquid. The gas was passed through a pressure control valve and a wet test meter to an appropriate vent. The liquid product was passed through a pressure control valve to a liquid product receiver.

In this and the following tests, the feed rate was set at 10.3 centimeters per hour, a liquid hourly space velocity (LHSV) of 0.5 volume of hydrocarbon per hour per volume of catalyst, and the temperature of the catalyst bed was approximately 780°F (416°C). The hydrogen addition rate was 10,000 SCFB (1,798 m³/m³).

The feedstock that was employed in this test, as well as in the tests in the other examples was a whole shale oil that had been obtained by in situ retorting by the Occidental Petroleum Corporation. The properties of this feed, hereinafter identified as Feed 1, are presented hereinafter in Table I.

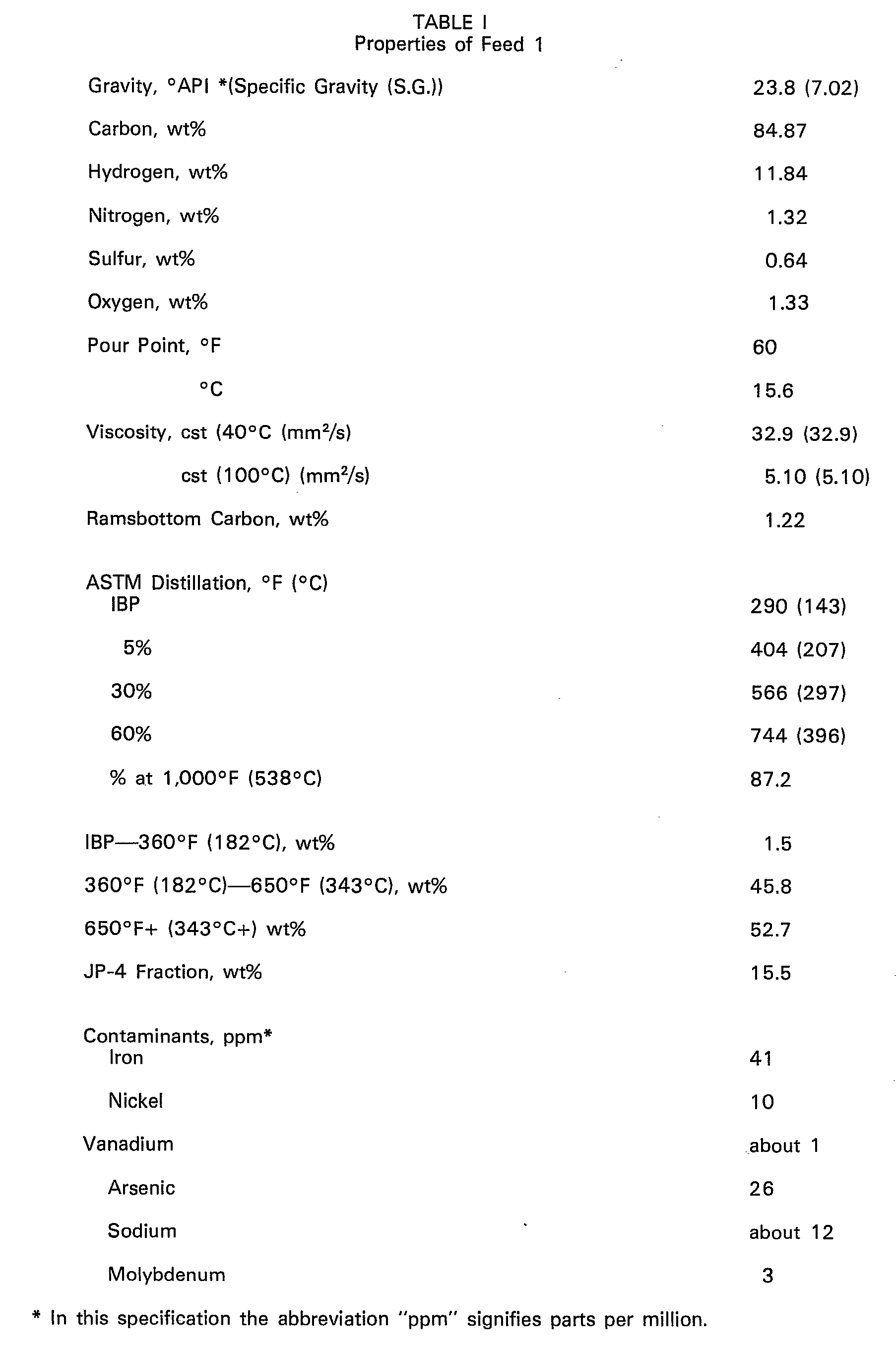

For convenience, the jet fuel component is identified hereinabove in Table I and hereinafter in subsequent Tables as JP-4 jet fuel boiling range material. It is intended that such designation should not limit the scope of the process of the present invention and that the term "jet fuel" as used herein and in the claims should encompass and include all types of jet fuel boiling range material.

The results obtained from the conversion of Feed No. 1 with Catalyst A in Test No. 1 are presented hereinafter in Table II.

^{*} Degrees API (°API) are determined by hydrometer measurement, corrected to 60°F (15.6°C) on a scale related to specific gravity S at 60°/60°F (15.6/15.6°C) as follows:

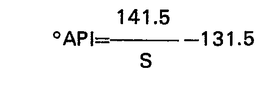

(see Perry and Chilton, Chemical Engineers' Handbook, 5th edition, McGraw-Hill Kogakusha, Ltd, International Student Edition, 9-10).

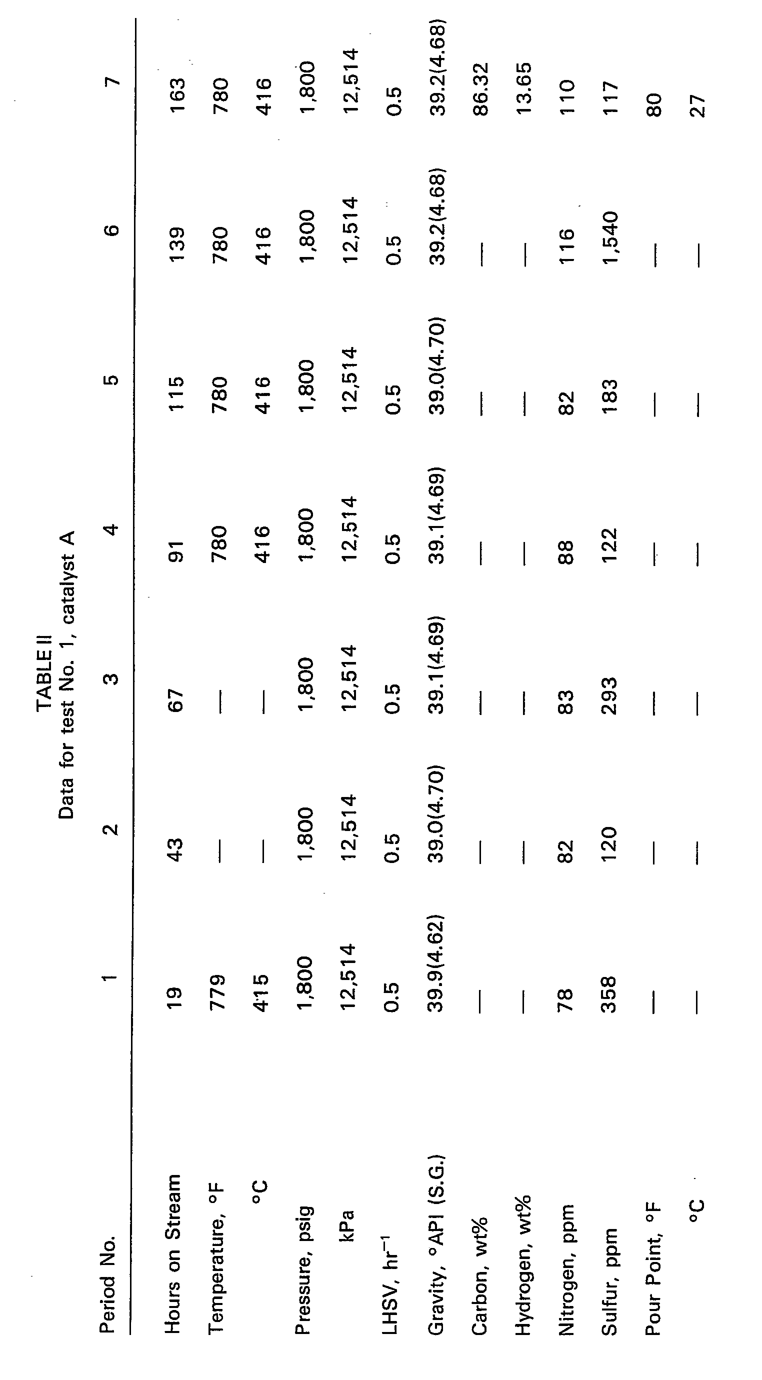

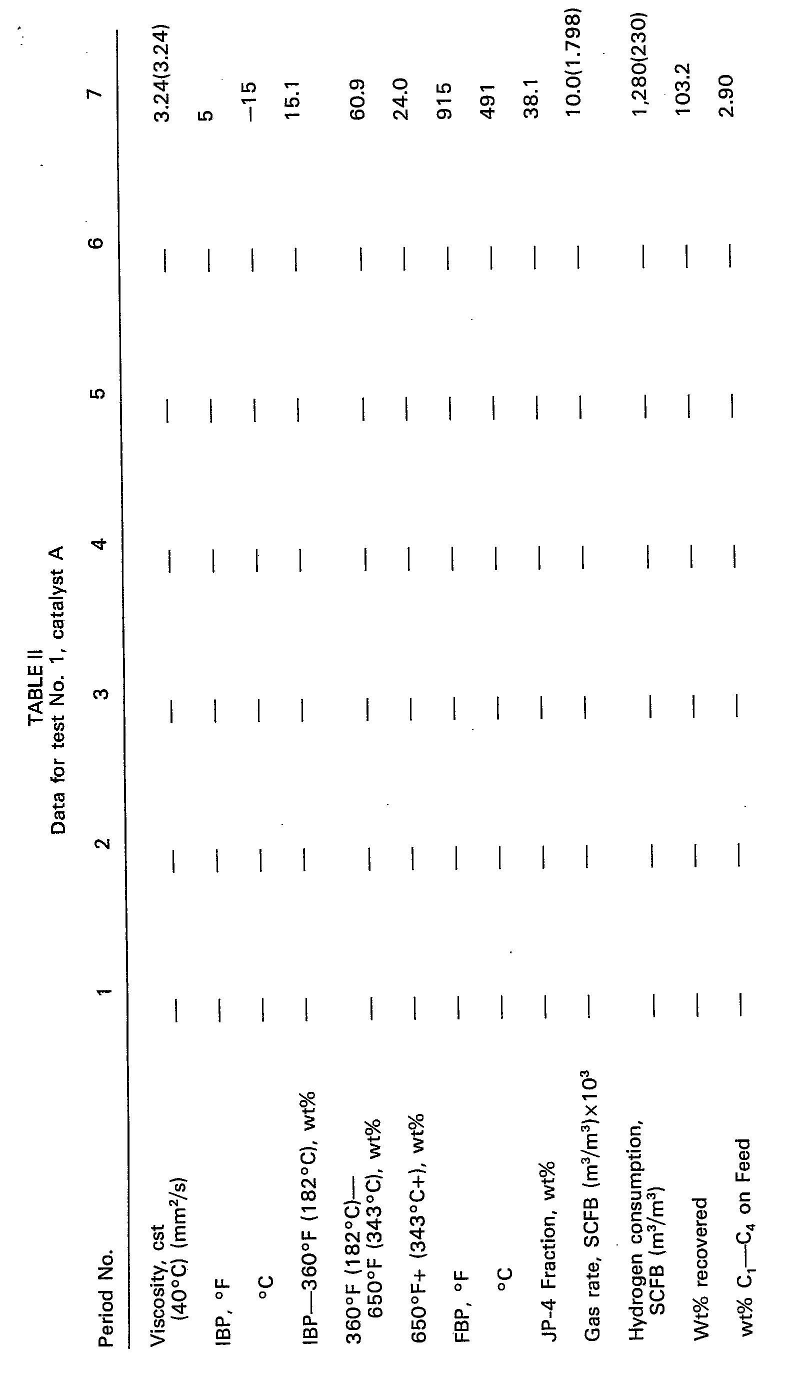

### Example II

A second catalyst, identified hereinafter as Catalyst B, was prepared to have a support composed of 30 wt% ultrastable, large-pore aluminosilicate material and 70 wt% alumina.

A 681-gram portion of finely-divided ultrastable, large-pore crystalline aluminosilicate material, obtained from W. R. Grace and Company, was introduced into 1 5,890 grams of a pHF-alumina hydrosol (approximately 10% solids) and the resulting mixture was stirred for approximately 2 hours, at which time a solution of 400 milliliters of concentrated ammonium hydroxide mixed with 400 millileters of distilled water was added to gel the hydrosol. The resulting gel was then dried overnight (approximately 16 hours) in static air at a temperature of 250°F (121°C). The dried material was then ground to pass through a 100-mesh screen (Tyler) (0.149 mm opening). Sufficient distilled water was added to the 100-mesh (0.149 mm) material to facilitate extrusion and the material was then extruded to 5/64" (2 mm) extrudates and dried overnight (approximately 16 hours) at a temperature of 250°F (121 °C). The dried extrudates were then calcined in static air for 3 hours at a temperature of 1,000°F (538°C).

A 294-gram portion of the calcined material containing ultrastable, large-pore crystalline aluminosilicate material was impregnated with a solution that had been prepared by dissolving 66.4 grams of (NH₄)₂Cr₂O₇ in 290 milliliters of distilled water. The extrudate and solution were mixed thoroughly and the mixture was permitted to stand overnight (approximately 16 hours). Then, it was calcined at a temperature of 1,000°F (538°C) for at least one hour. The calcined material was then impregnated with a solution that had been prepared by dissolving 73.6 grams of (NH₄)₆Mo₇O₂₄. 4H₂O in 250 milliliters of distilled water. The mixture of solution and solid was permitted to stand over the weekend (approximately 64 hours). The resulting material was then calcined at a temperature of 1,000°F (538°C) for 7 hours.

A 195-gram portion of the above material was impregnated with a solution that had been prepared by dissolving 11.65 grams of Co(NO₃)₂6H₂O in 125 milliliters of distilled water. The solution and solid material were mixed and allowed to stand overnight (approximately 16 hours). The resulting material was then calcined at a temperature of 1,000°F (538°C) in static air for at least one hour. The calcined material was then ground to pass through a 14-mesh screen (Tyler) (1.19 mm opening), but be retained upon a 20-mesh screen (Tyler) (0.84 mm opening), i.e. to a 14/20-mesh (1.19 mm/0.84 mm) material.

This catalyst, Catalyst B, was prepared to contain 1.5 wt% CoO, 10 wt% Cr₂0₃, and 15 wt% Mo03 on a support composed of 30 wt% ultrastable, large-pore crystalline aluminosilicate material and alumina.

A 20-cubic centimeter portion of Catalyst B was loaded into a reactor as described hereinabove in Example I and was tested for its ability to convert Feed. 1. The results of this test, Test No. 2, are presented hereinbelow in Table III.

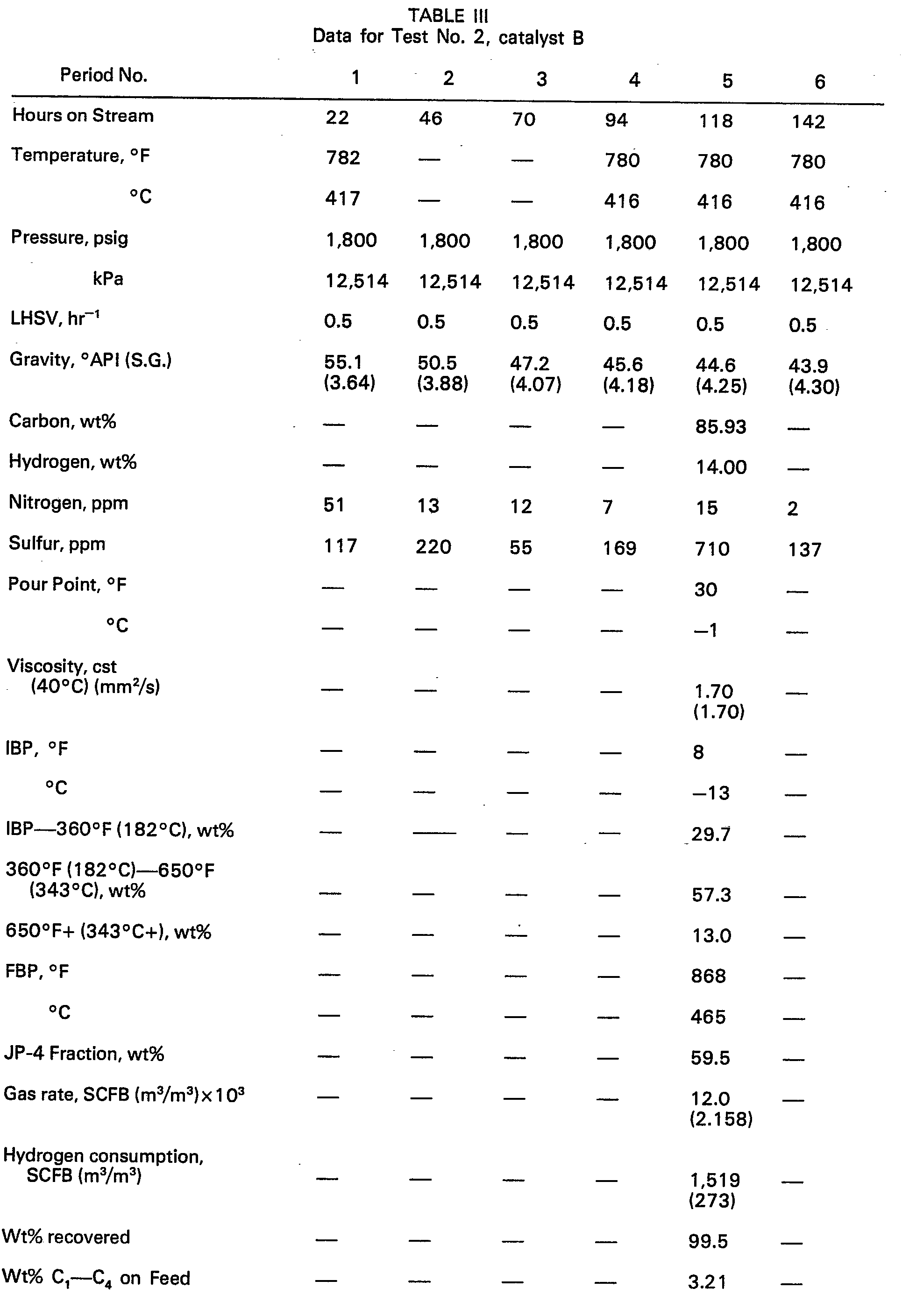

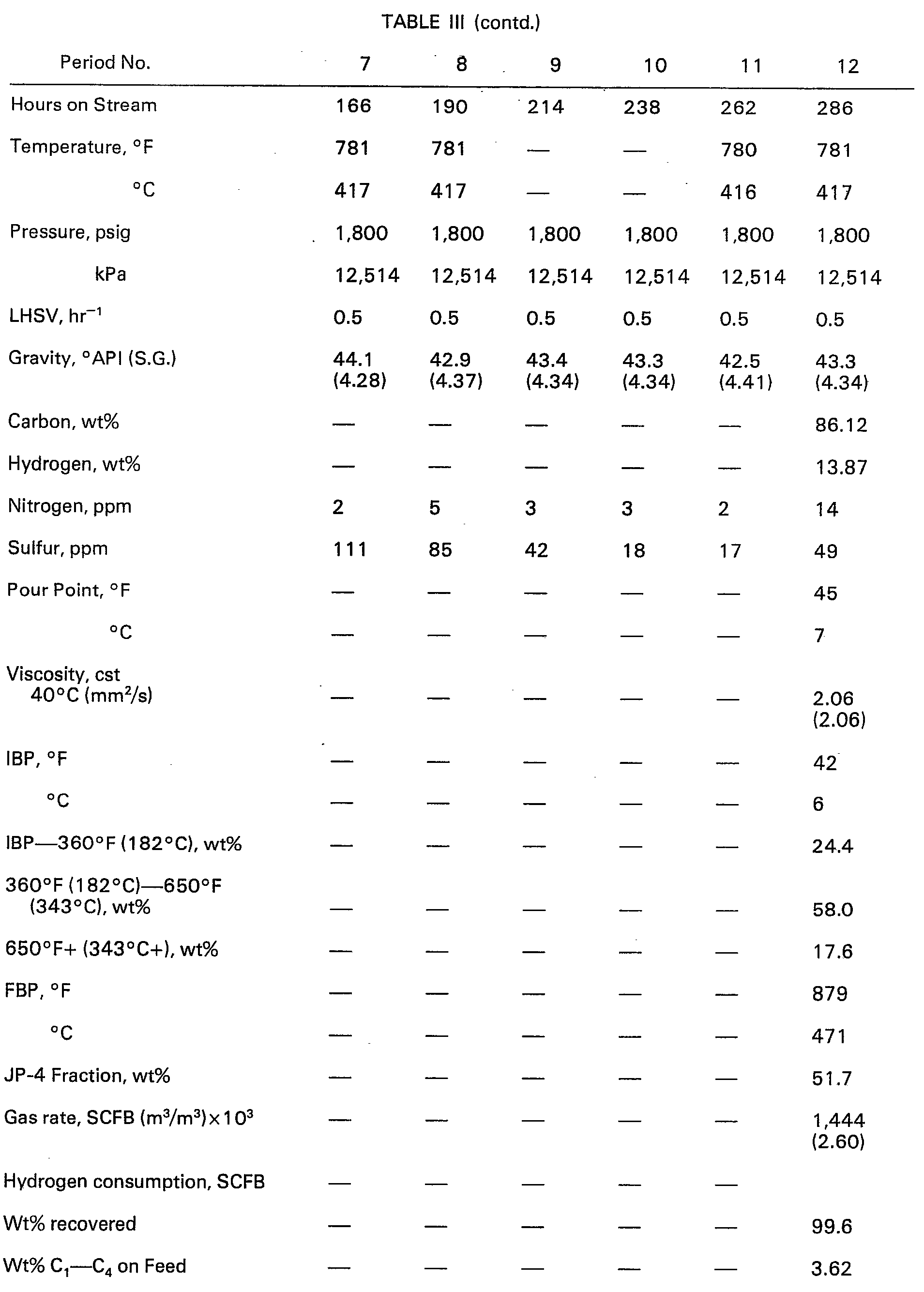

A comparison of Catalyst B with Catalyst A shows that Catalyst B provided a product containing a much lower amount of nitrogen and significantly more naphtha and having a pour point that was significantly lower than that of the product obtained with Catalyst A. Therefore, Catalyst B was found to be an improved catalyst for the hydrodenitrogenation and hydrocracking of the whole shale oil feed.

### Example III

A third catalyst, hereinafter identified as Catalyst C, was prepared to contain 1.5 wt% CoO, 10 wt% Cr₂0₃, and 15 wt% Mo03 on a support comprising 20 wt% rare earth metal-exchanged Y-type molecular sieves in a matrix of alumina.

A Y-type molecular sieve, designated as "SK-40" (Trade Mark) and obtained from the Linde Division of Union Carbide Corporation, was exchanged with a chloride solution of rare earth metals. A 3,000-gram portion of the SK-40 material was slurried in 8 liters of distilled water. The rare earth chloride solution contained cerium, lanthanum, and praseodymium. A 4,000-gram amount of the chloride solution was added to the molecular sieve material and the resulting material was stirred while being heated to reflux for approximately 1 hour. The solids were then allowed to settle overnight (approximately 16 hours) and the supernatant layer, 5,500 milliliters, was syphoned off from the solid material. Then, 4,000 grams of the rare earth metal solution and 3,000 milliliters of distilled water were added to the solid material and the mixture was stirred while heating to reflux for 1 hour. The solid material was then allowed to settle and 6,200 milliliters of supernatant liquid were syphoned off. Another 4,000 grams of rare earth chloride solution and 3,600 milliliters of distilled water were added to the molecular sieves and the resulting composite was stirred while heating to reflux for 1 hour. The solid material was then permitted to settle and 6,500 milliliters of supernatant liquid were syphoned from the molecular sieves. Subsequently, 6,500 millilitres of distilled water were added to the molecular sieve material and the resulting composite was stirred with heating for 1 hour at a temperature of 210°F (99°C). The slurry was filtered and dried at 250°F (121°C) for at least 1 hour and then calcined in air at a temperature of 1,340°F (727°C).

The above 3-step exchange with the rare earth metal solution was repeated with the exception that 2,000 grams of the chloride solution were employed and 400 grams of ammonium nitrate were added during the last exchange step. The exchanged material was then washed 4 times with distilled water as above and filtered. The filter cake was dried overnight (approximately 16 hours) at a temperature of 250°F (121°C).

The resulting molecular sieve was found to be 100% crystalline and to contain the following elements: 13.3 wt% aluminum, 27.9 wt% silicon, 7.2 wt% cerium, 3.8 wt% lanthanum, 2.7 wt% sodium, and approximately 1 wt% praseodymium.

A 90-gram portion of the rare earth metal-exchanged molecular sieve was ground and screened to pass through a 100-mesh screen (Tyler) (0.149 mm opening), made up into a paste by the addition of distilled water, and added to 3,600 grams of a pHF-alumina sol (approximately 10 wt% solids) obtained from the Americal Cyanamid Company. The resulting mixture was blended in a large blender for 15 minutes. Then, 250 cubic centimeters of a solution that had been prepared by mixing equal amounts of distilled water and concentrated ammonium hydroxide were added to the blend to gel the sol. Two of these batches were made and combined and dried at a temperature of 250°F (121°C) for approximately 64 hours (over the weekend) in circulating air. The dried material was subsequently ground and sieved to an 100-mesh (0.149 mm) material, mulled with distilled water, and extruded as 5/64-inch (2 mm) extrudates. The extrudates were dried for 2 hours at a temperature of 250°F (121 °C) and then calcined in air at a temperature of 1,000°F (538°C) for 2 hours.

A 147-gram portion of the calcined rare earth metal-exchanged molecular sieve in a matrix of alumina material was added to a solution that had been prepared by adding 33.2 grams of (NH,)₂Cr₂O₇ in 140 milliliters of distilled water. This mixture was then allowed to stand for 1 hour and then dried under a heat lamp. The dried chromium-containing material was then impregnated with a solution that had been prepared by dissolving 36.8 grams of ammonium molybdate in distilled water and adding to the solution 11.65 grams of Co(NO,)₂. 6H₂0. The mixture was allowed to stand for approximately 1 hour and subsequently dried under a heat lamp. The dried impregnated material was then calcined for 1 hour in air at a temperature of 1,000°F (538°C).

A 20-cubic centimeter sample of Catalyst C, as 14/20-mesh particles, was charged to the reactor of a bench-scale pilot plant and was tested for its ability to hydrodenitrogenate and hydrocrack Feed No. 1. The results of this test, Test No. 3, are presented herein below in Table IV.

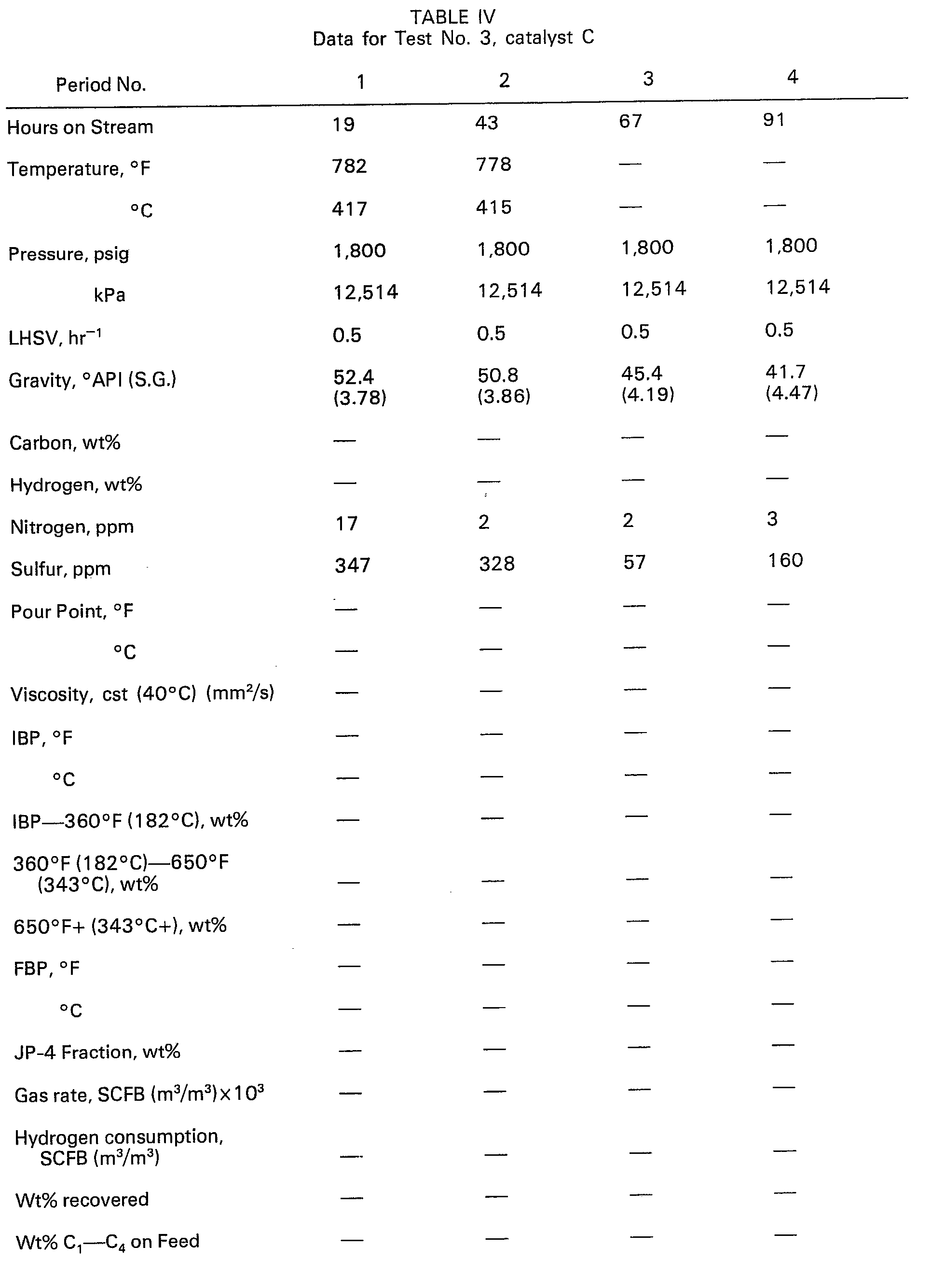

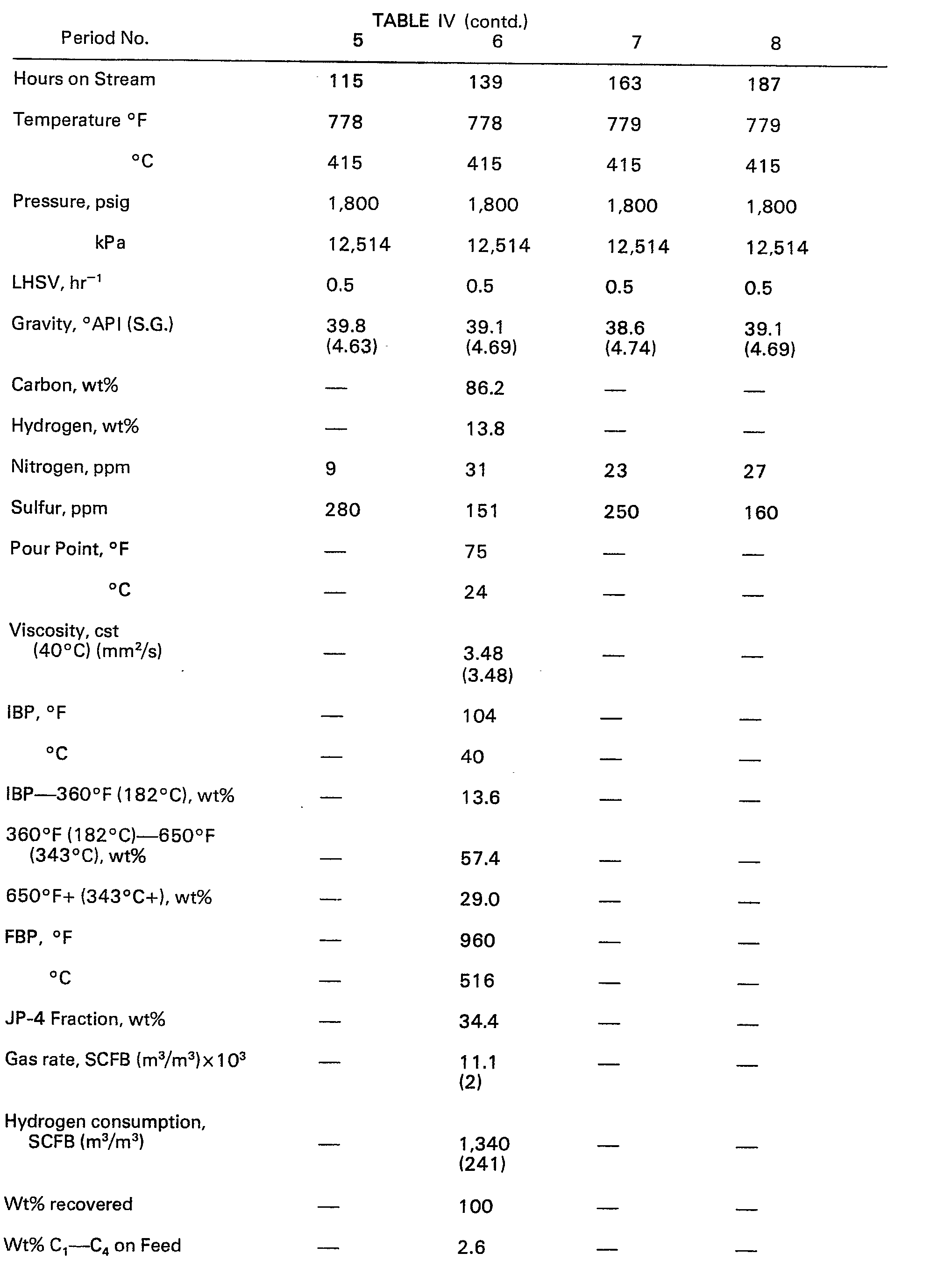

The results presented in Table IV indicate that Catalyst C, when compared to Catalyst A, did a very good job in reducing the amount of nitrogen in the shale oil but only accomplished a small amount of hydrocracking as indicated by the pour point of 75°F (23.9°C).

### Example IV

A fourth catalyst, hereinafter identified as Catalyst D, was prepared. This catalyst contained a support comprising a ZSM-5 aluminosilicate suspended and distributed throughout a matrix of alumina.

The ZSM-5 aluminosilicate was prepared first. A 37.2-gram portion of sodium hydroxide was dissolved in 400 milliliters of distilled water. A 207.9-gram portion of tetra-n-propylammonium bromide was added to the solution and dissolved therein. Then, 42 grams of sodium aluminate were added to the solution and dissolved therein. Subsequently, 1,007 grams of Ludox (Trade Mark) AS-30 (30% SiO₂) were added to the solution and sufficient distilled water was added to the resulting blend to make a total volume of 1,800 milliliters. The resulting material was then placed in a Teflon (Trade Mark) container and into an autoclave. The material was then maintained at a temperature of from 450°F (232°C) to 470°F (243°C) for 6 days. The crystalline material was removed from the autoclave and washed with hot distilled water by reslurrying three times. The crystalline material was dried in air at 250°F (121 °C) overnight (approximately 16 hours) and calcined in air for 3 hours at a temperature of 1,000°F (538°C). The resulting material was examined by X-ray diffraction and found to be ZSM-5 aluminosilicate material.

A 389-gram portion of the ZSM-5 molecular sieve was exchanged three times by slurrying in 3,000 milliliters of distilled water containing 202 grams of ammonium nitrate, filtering after each exchange, washing three times by reslurrying in 3,500 milliliters of distilled water, and refiltering after each wash. The washed and exchanged ZSM-5 material was then dried in air overnight (approximately 16 hours) at a temperature of 250°F (121°C) and calcined in air for 3 hours at a temperature of 1,000°F (538°C).

This hydrogen form of ZSM-5 material was found to contain 370 parts per million of sodium, 84.9 wt% of silica, and 3.7 wt% alumina. X-ray diffraction analysis showed it to be 84% crystalline and to have the X-ray diffraction pattern of ZSM-5 material.

A 90-gram portion of the hydrogen-form ZSM-5 molecular sieves was ground and screened to pass through 100-mesh screens (Tyler) (0.149 mm opening). It was made into a semi-paste material by the addition of distilled water. It was then added in portions to 3,600 grams of PHF-alumina sol (approximately 10 wt% solids) obtained from the American Cyanamid Company. The mixture was blended in a large blender after the addition of each portion of the ZSM-5 material. After all of the molecular sieve had been added to the sol, stirring of the blend continued for a time within the range of 10 to 15 minutes. Then 250 cubic centimeters of a solution having been prepared with equal amounts of concentrated ammonium hydroxide and distilled water were added to the slurry and the mixture was immediately blended until the sol gelled. This procedure was repeated. Both batches of the final gel were combined and dried in air overnight at a temperature of 250°F (121°C) in circulating air.

The dried material was ground and screened to a 100-mesh material (Tyler) (0.149 mm opening). The resulting ground material was mulled with distilled water and extruded to form 5/64" (2 mm) extrudates, which were then dried in static air overnight (approximately 16 hours) at a temperature of 250°F (121°C). The dried extrudates were calcined in air for at least 4 hours at a temperature of 1,000°F (538°C). This material was prepared to contain 20 wt% ZSM-5 molecular sieves suspended in and dispersed throughout a matrix of alumina.

A 147-gram portion of the calcined extrudates was impregnated with a solution that had been prepared by dissolving 33.2 grams of (NH₄)₂Cr₂O₇ in 145 milliliters of distilled water. The resulting composite was allowed to stand over the weekend (approximately 64 hours). Then it was calcined for 1 t hours at a temperature of 1,000°F (538°C) and the material was then impregnated with a solution that had been prepared by dissolving 11.65 grams of Co(N0₃)₂.6H₂0 and 36.8 grams of (NH₄)₆Mo₇O₂₄. 4H₂O in 125 milliliters of distilled water. This solution was added to the solid material with stirring. After standing for 1 hour, the resulting material was dried under a heat lamp for 2 hours and then in an oven in air for 2 hours at a temperature of 250°F (121°C). The dried material was calcined for 2 hours in air at a temperature of 1,000°F (538°C). The resulting material, Catalyst D, was prepared to contain 1.5 wt% CoO, 10 wt% Cr₂0₃, and 15 wt% Mo03 on a support containing 20 wt% ZSM-5 molecular sieves suspended in and distributed throughout a a matrix of alumina, the amount of ZSM-5 molecular sieve being based upon the weight of the support and the amounts of the oxides of the hydrogenation metals being based upon the weight of the total catalyst.

The sample of the catalyst, as 14/20-mesh particles, was charged to the reactor of the small-scale test unit and was tested for its ability to hydrodenitrogenate and hydrocrack Feed No. 1. The results of this test, Test No. 4, are presented hereinbelow in Table V.

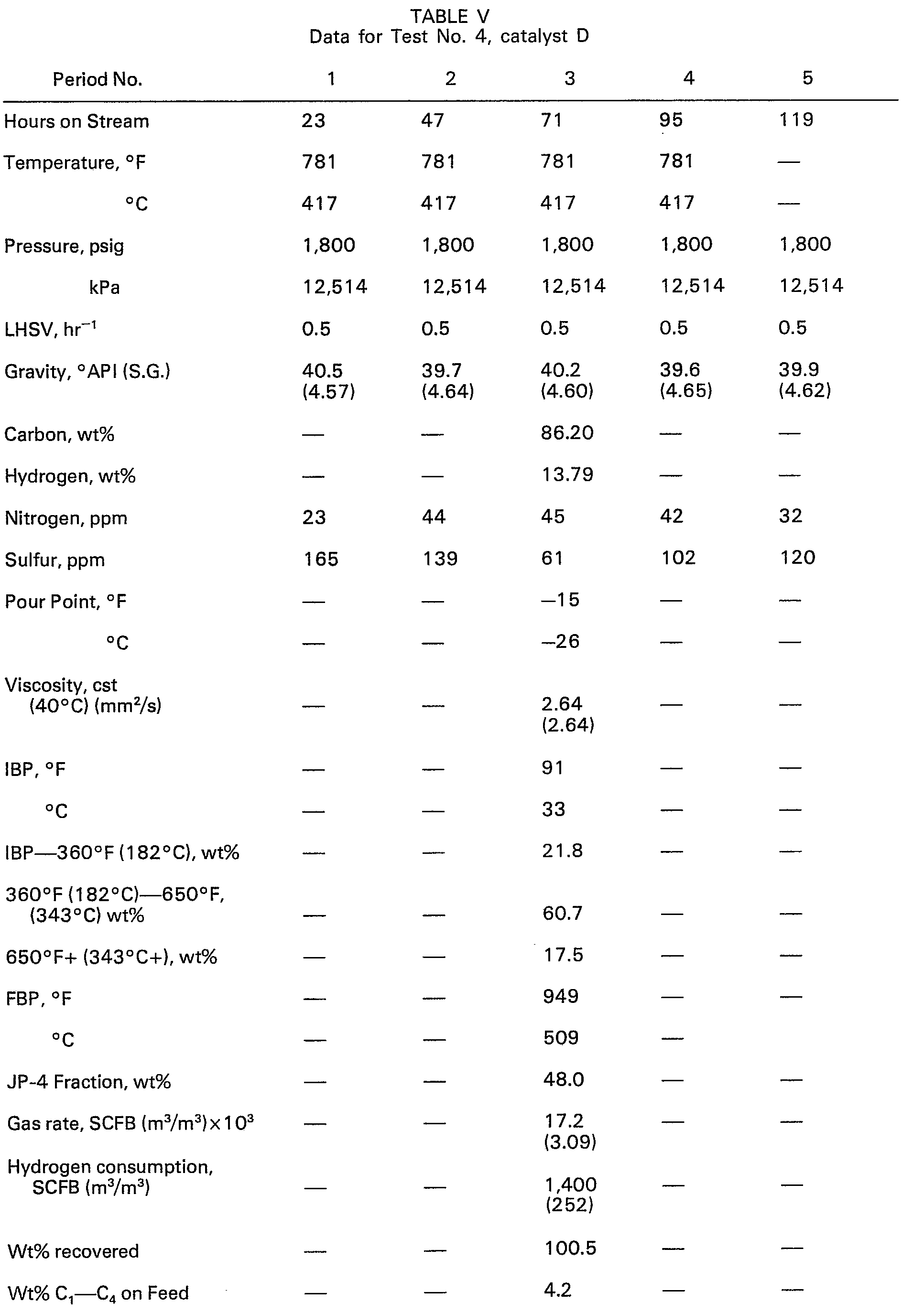

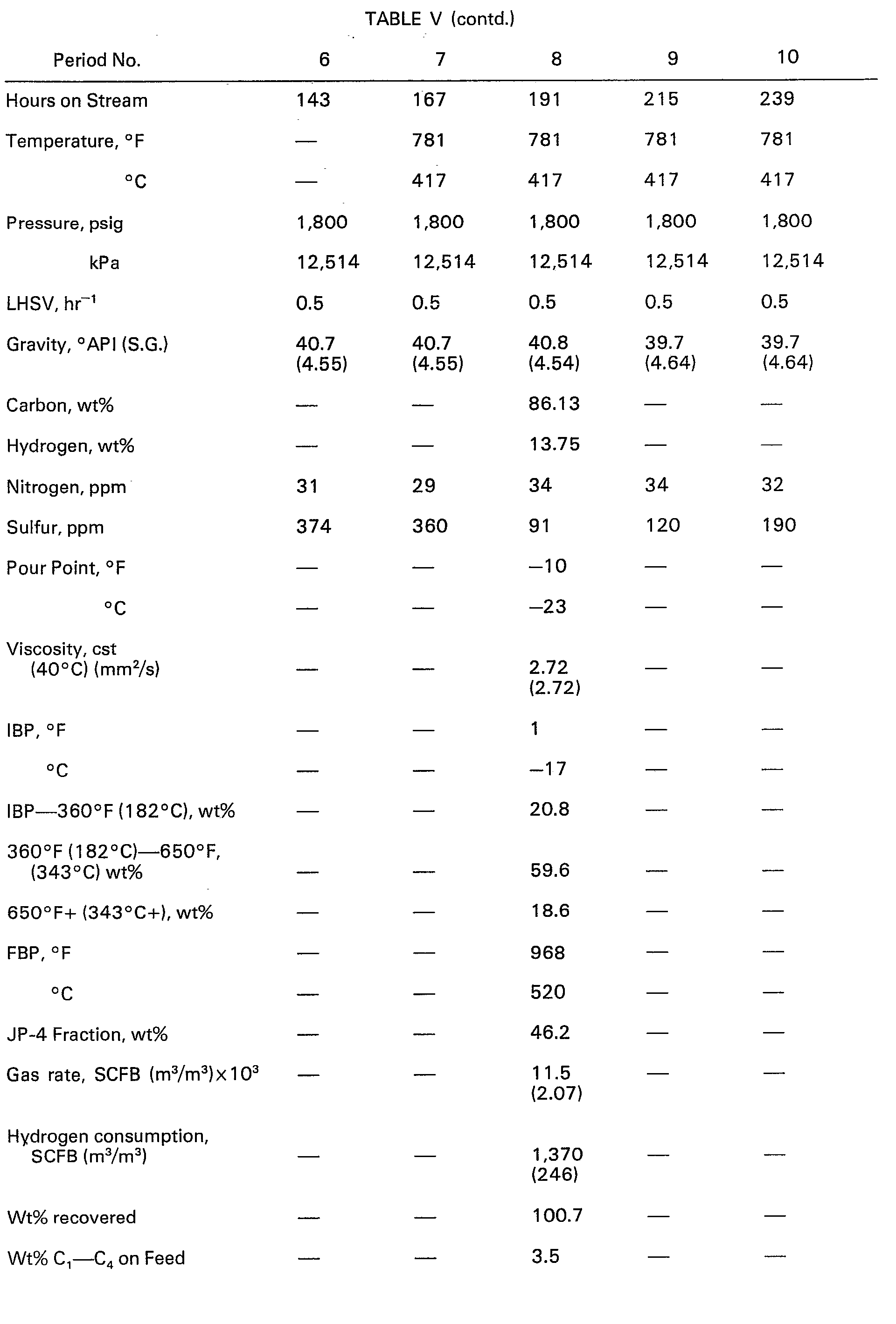

The results of Test No. 4 demonstrate that Catalyst D provided satisfactory hydrodenitrogenation and hydrocracking when compared with the performance of Catalyst A.

### Example V

A fifth catalyst, hereinafter identified as Catalyst E, was prepared and tested for its ability to hydrodenitrogenate and hydrocrack Feed No. 1.

A crystalline borosilicate prepared by ArChem Company was determined by X-ray diffraction analysis to be crystalline AMS-1 B borosilicate.

A 90-gram portion of the hydrogen form of AMS-1 B was suspended in sufficient distilled water (approximately 150 milliliters) to obtain a mixture having a sauce-like consistency. This mixture was then added to 3,600 grams of PHF-alumina sol (10 wt% solids), obtained from the American Cyanamid Company. The resulting composite was then thoroughly mixed and 400 milliliters of a solution that was prepared by mixing equal amounts of concentrated ammonium hydroxide and distilled water were added and mixed to provide a gel. The resulting gel was removed from the mixer and placed in a large pan and dried in an oven at a temperature of 250°F (121 °C) for at least an hour. A second batch was prepared exactly as the first batch described hereinabove. After both batches were dried, they were mixed together and ground to pass through a 100-mesh screen (Tyler) (0.149 mm opening). This 100- mesh (0.149 mm) material was mulled with distilled water and extruded to form 5/64-inch (2 mm) extrudates and the extrudates were dried at 250°F (121 °C) for at least an hour and subsequently in air overnight (approximately 16 hours) at a temperature of 1,000°F (538°C). During the mulling procedure for the formation of the extrudates, the fine powder became too wet and some additional PHF-alumina was added to the material to dry it.

A 294-gram portion of the calcined extrudates was impregnated with a solution that had been prepared by dissolving 66.4 grams of (NH₄)₂Cr₂O₇ in 270 milliliters of distilled water. The excess liquid was decanted and the impregnated material was calcined overnight (approximately 16 hours) in air at a temperature of 1,000°F (538°C). The following morning, the excess liquid was added to the catalyst and the material was calcined again. The calcined material was then impregnated with a solution that had been prepared by dissolving 73.6 grams of (NH₄)₆Mo₇O₂₄. 4H₂O in 200 milliliters of distilled water. The impregnated material was calcined at 1,000°F (538°C) over the weekend (approximately 64 hours).

A 190-gram portion of the molybdenum-containing catalyst was impregnated with a solution that had been prepared by dissolving 11.65 grams of Co(NO_{I})₂. 6H₂0 in 100 milliliters of distilled water. The resulting material was calcined at a temperature of 1,000°F (538°C) for at least 1 hour and then ground and screened to a 14/20-mesh (1.19/0.84 mm) material, i.e., a material that would pass through a 14-mesh screen (Tyler) (1.19 mm opening) but be retained upon a 20-mesh screen (Tyler) (0.84 mm opening).

The resultant catalyst, Catalyst E, was prepared to contain 1.5 wt% CoO, 10 wt% Cr₂0₃, and 15 wt% Mo03 on a support comprising 20 wt% hydrogen-form AMS-1 B crystalline borosilicate.

A 20-cubic centimeter portion of Catalyst E was loaded into a reactor of a small-scale test unit and was tested for its ability to hydrodenitrogenate and hydrocrack Feed No. 1. The results of this test, Test No. 5, are presented hereinbelow in Table VI.

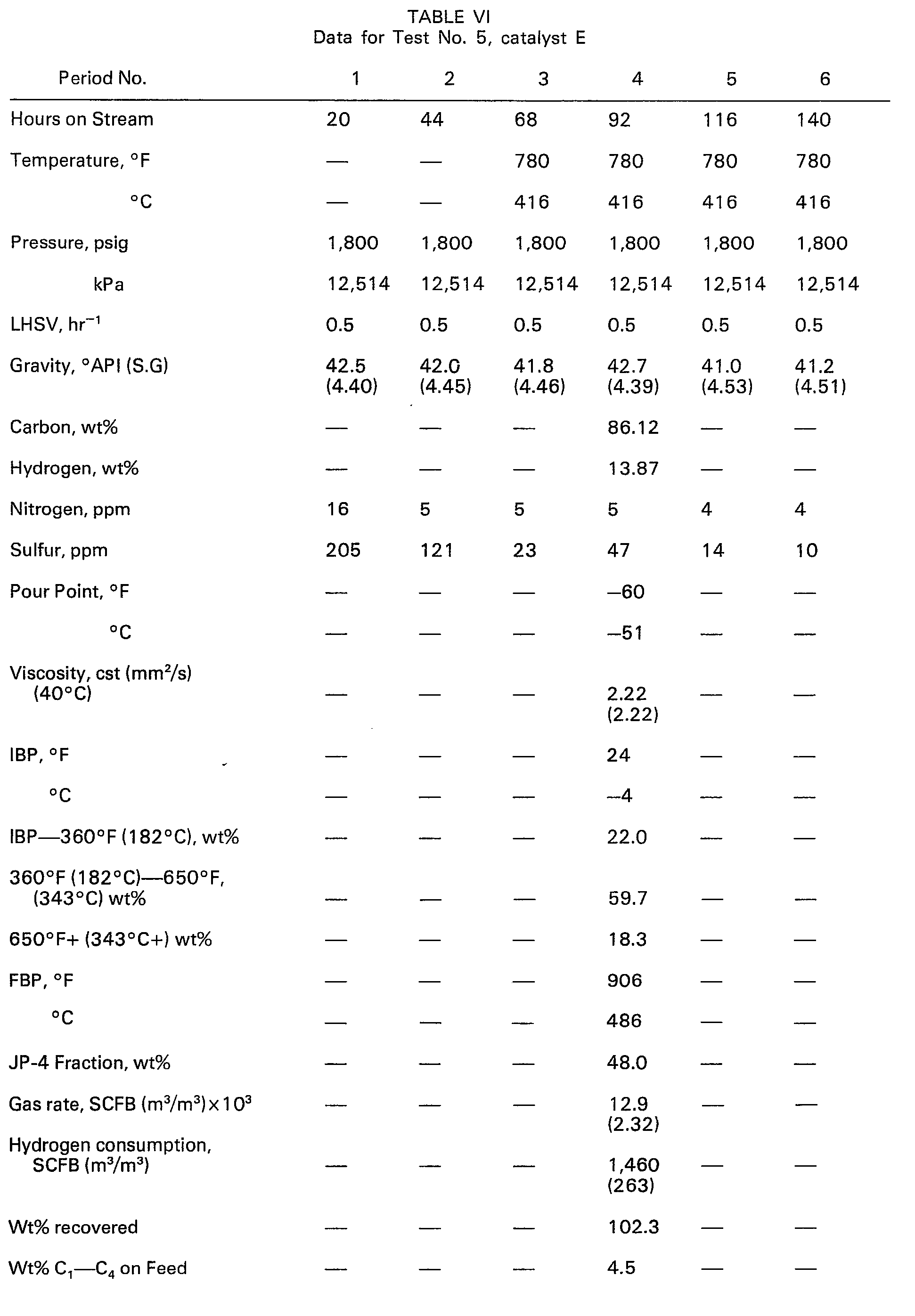

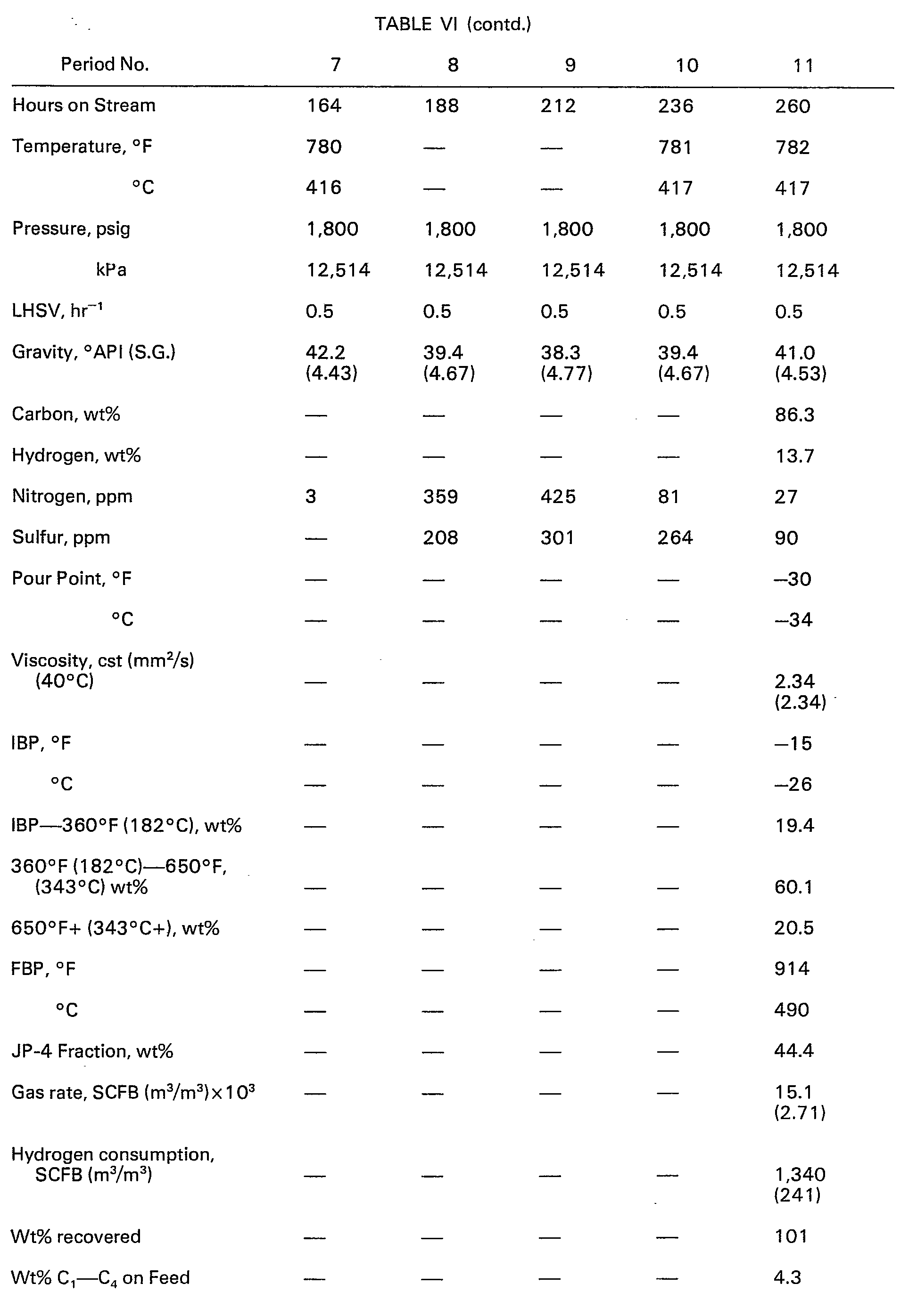

The results of Test No. 5, show that Catalyst E is a very good catalyst for the hydrodenitrogenation and hydrocracking of the whole shale oil.

### Example VI

A sixth catalyst, Catalyst F, was prepared and tested for its ability to hydrodenitrogenate and hydrocrack Feed No. 1.

A 90-gram portion of Zeolon-H (Trade Mark) synthetic mordenite molecular sieves, obtained from the Norton Chemical Company, was ground and screened to pass through a 100-mesh screen (Tyler) (0.149 mm opening). This 100-mesh (0.149 mm) material was then made into a slurry by adding distilled water and the resulting slurry was added at one time to 3,600 grams of PHF-alumina sol (10 wt% solids), obtained from the American Cyanamid Company, in a large blender. The resulting mixture was blended for 15 minutes. Then, 250 cubic centimeters of a solution prepared by mixing equal amounts of distilled water and concentrated ammonium hydroxide were added thereto. The resulting material was blended immediately until solid appeared. The above procedure was repeated and the material obtained therefrom was combined with that obtained from the first batch. The combined product was dried at a temperature of 250°F (121°C) in circulating air over the weekend (approximately 64 hours).

The resulting dried material was ground and screened to pass through 100-mesh screens (Tyler) (0.149 mm opening) and then mulled with distilled water and formed into 5/64" (2 mm) extrudates which were dried in air for 2 hours at a temperature of 250°F (121°C). The dried extrudates were calcined for at least 4 hours at a temperature of 1,000°F (538°C).

The calcined material was impregnated with a solution that had been prepared by dissolving 33.2 grams of (NH₄)₂Cr₂O₇ in 140 cubic centimeters of distilled water. A 147-gram portion of the calcined extrudates was used. The resulting composite was allowed to stand for approxiately 1 hour and dried under a heat lamp. The dried material was impregnated with a solution that had been prepared by dissolving 36.8 grams of ammonium molybdate in distilled water and then 11.65 grams of cobalt nitrate in the solution, sufficient water being used to result in a final volume of 120 cubic centimeters. The solution was added to the catalytic material and the mixture was allowed to stand for 1 hour. The material was dried under a heat lamp and calcined for at least 1 hour in air at a temperature of 1,000°F (538°C). This catalyst, Catalyst F, was prepared to contain 1.5 wt% CoO, 10 wt% Cr_{z}0₃, and 15 wt% Mo03 on a support comprising 20 wt% hydrogen-form Zeolon (Trade Mark) and alumina.

A 20-cubic centimeter portion of Catalyst F was loaded into a test reactor and tested in a small-scale test unit for its ability to hydrodenitrogenate and hydrocrack Feed No. 1. The results of this test, Test No. 6, are presented hereinbelow in Table VII.

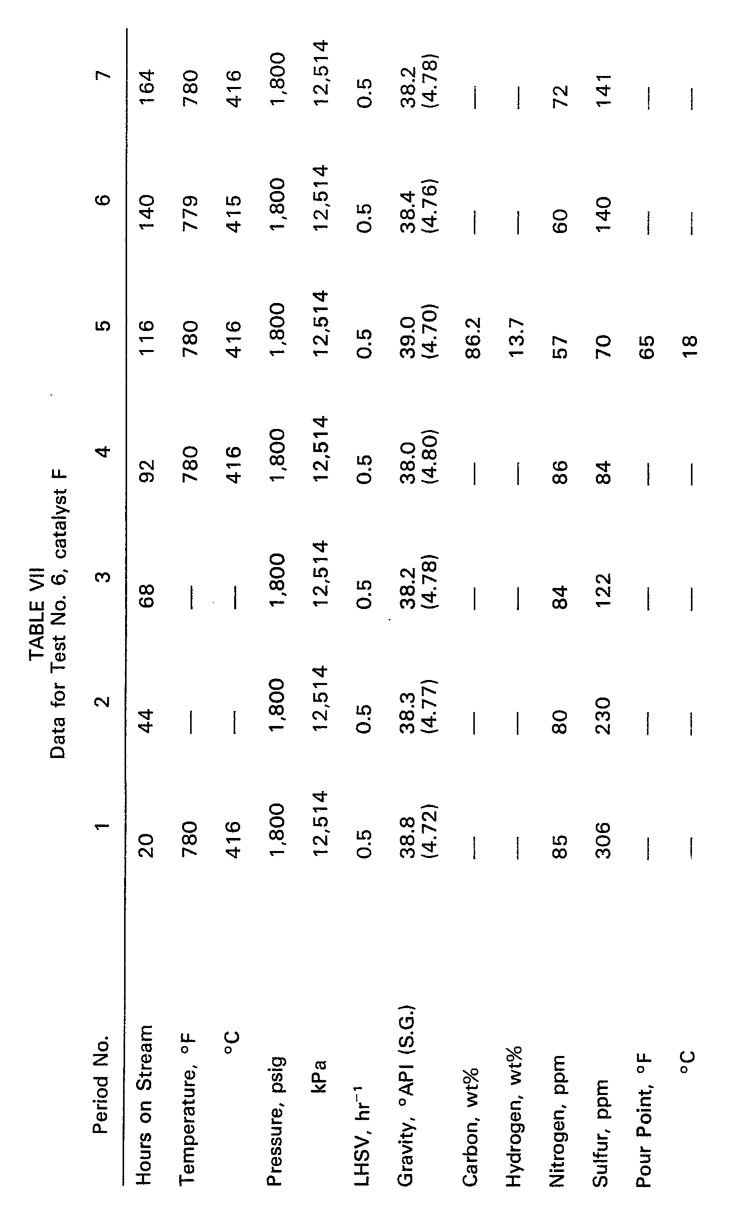

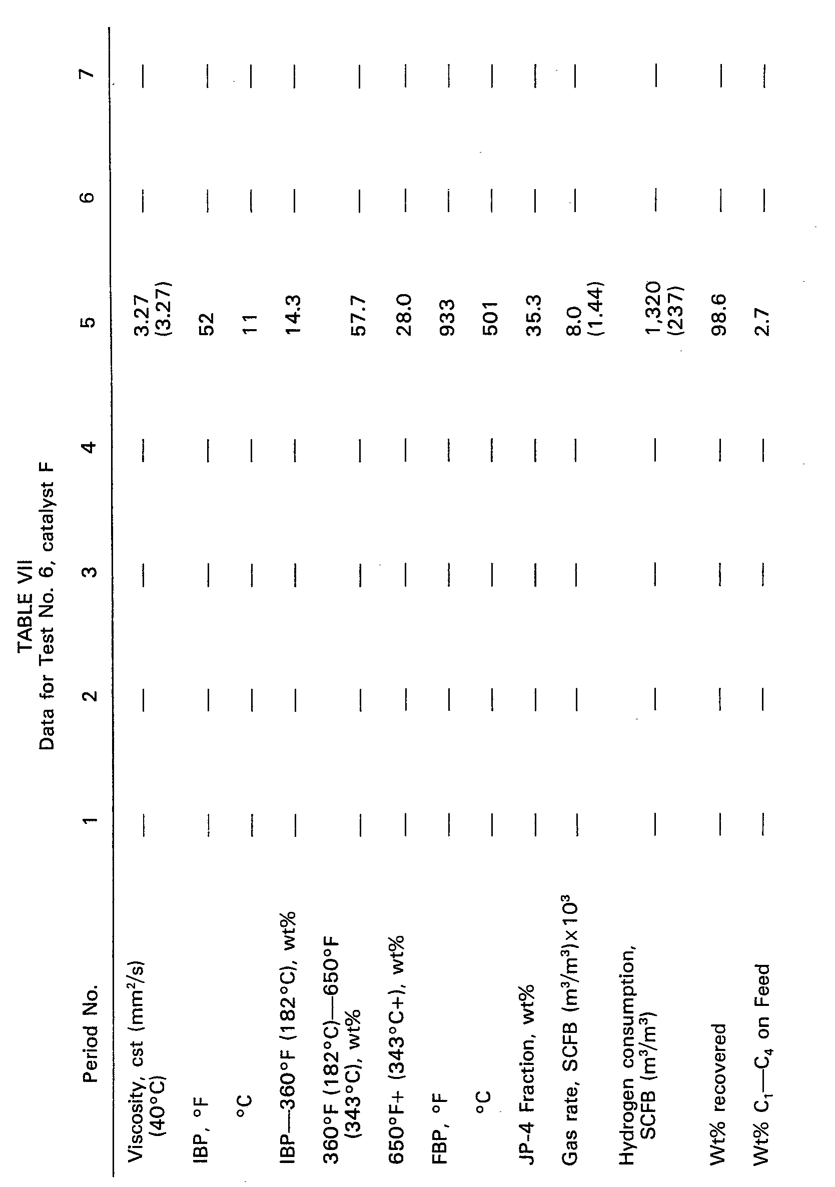

The results shown in Table VII indicate that Catalyst F does not provide as much denitrogenation as the other catalysts discussed hereinabove. In addition, it does provide as much hydrocracking of the shale oil as does Catalyst C.

### Example VII

A seventh catalyst, Catalyst G, was prepared and tested for its ability to hydrodenitrogenate and hydrocrack Feed No. 1.

A 90-gram portion of low-soda Diuturnal-Y 33-200 (Trade Mark) crystalline molecular sieve, obtained from the Linde Division of Union Carbide Corporation, in the form of 100-mesh material, that is, a material that would pass through a 100-mesh screen (Tyler) (0.149 mm opening), was made into a paste by the addition of distilled water and blended with 3,600 grams of PHF-alumina sol (approximately 10 wt% alumina) in a large blender. The PHF-alumina sol was obtained from the American Cyanamid Company. The resulting mixture was blended for 15 minutes. Then, 250 cubic centimeters of a solution prepared by mixing equal amounts of distilled water and concentrated ammonium hydroxide were added thereto. The resulting material was blended until a solid appeared. The above procedure was repeated and the material obtained from the second preparation was combined with that obtained from the first. The combined product was dried in an oven in air at a temperature of 250°F (121 °C) overnight (approximately 16 hours).

The resulting dried material was ground and screened to pass through a 100-mesh screen (Tyler) (0.149 mm opening) and then mulled with distilled water and formed into 5/64" (2 mm) extrudates, which were dried in air in an oven overnight (approximately 16 hours) at a temperature of 250°F (121 °C) and calcined in air at a temperature of 1,000°F (538°C) for at least 1 hour.

The calcined material was impregnated with a solution that had been prepared by adding 66.4 grams of (NH₄)₂Cr₂O, to 200 milliliters of distilled water and subsequently adding sufficient water to bring the volume of the resulting solution to 250 cubic centimeters. A 294-gram portion of the calcined extrudates was used. The resulting composite was allowed to stand for approximately 1 hour and dried under a heat lamp. The material was then dried in an oven overnight (approximately 16 hours) at a temperature of 250°F (121 °C) and calcined in an oven in air at a temperature of 1,000°F (538°C) for at least 1 hour. A 166-gram portion of the dried material was impregnated with a solution that had been prepared by dissolving 36.8 grams of ammonium molybdate in water and 11.65 grams of cobalt nitrate in the resulting solution, sufficient water being used to result in a final volume of 110 cubic centimeters. The solution was added to the catalytic material and the mixture was allowed to stand for 1 hour. The material was then dried under a heat lamp and calcined for at least 1 hour in air at a temperature of 1,000°F (538°C). This catalyst, Catalyst G, was prepared to contain 1.5 wt% CoO, 10 wt% Cr_{z}0₃, and 15 wt% Mo03 on a support comprising 20 wt% Diuturnal-Y (Trade Mark) molecular sieves and alumina.

A 20-cubic centimeter portion of Catalyst G was loaded into a test reactor and tested in a small-scale test unit for its ability to hydrodenitrogenate and hydrocrack Feed No. 1. The results of this test, Test No. 7, are presented hereinbelow in Table VIII.

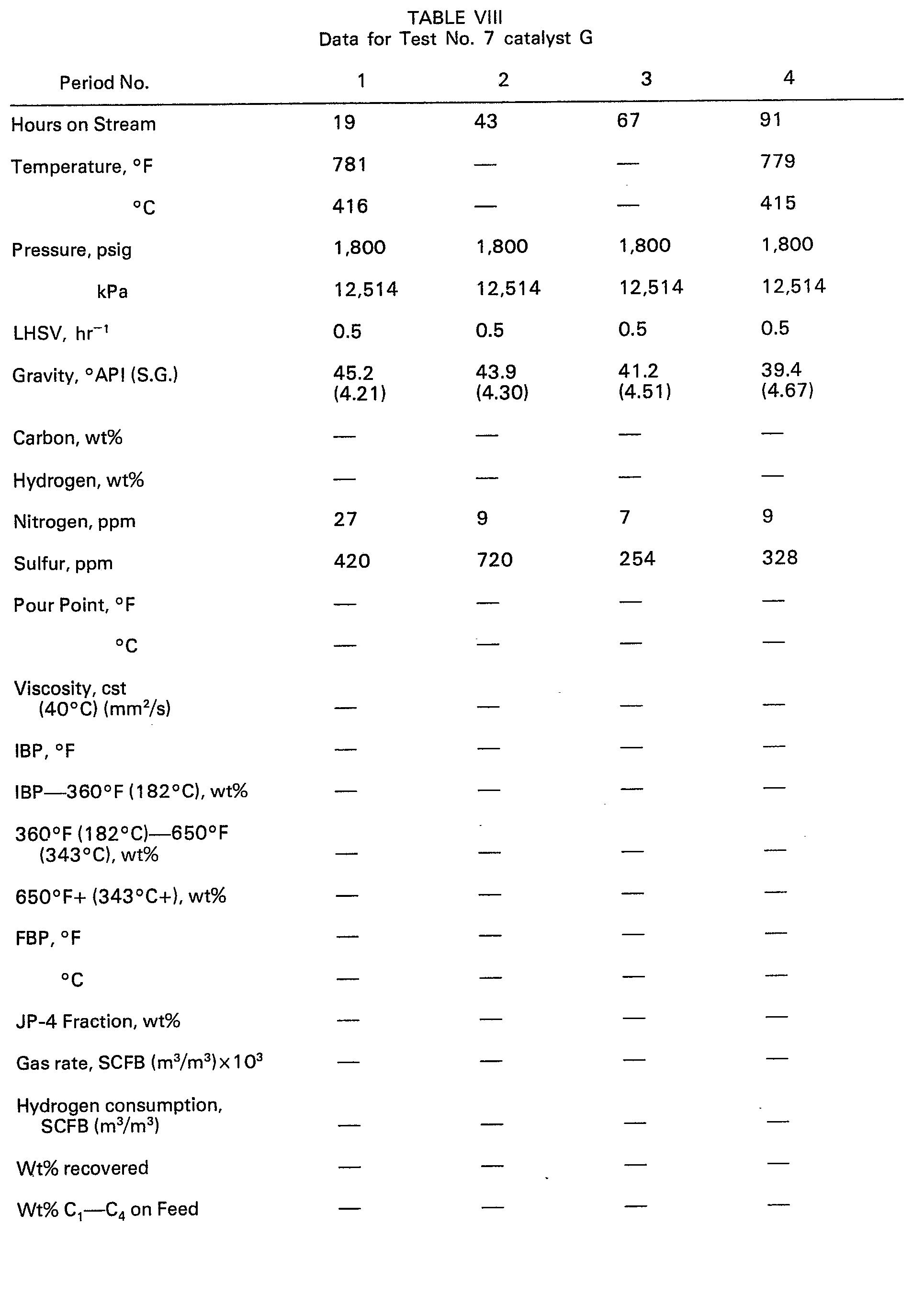

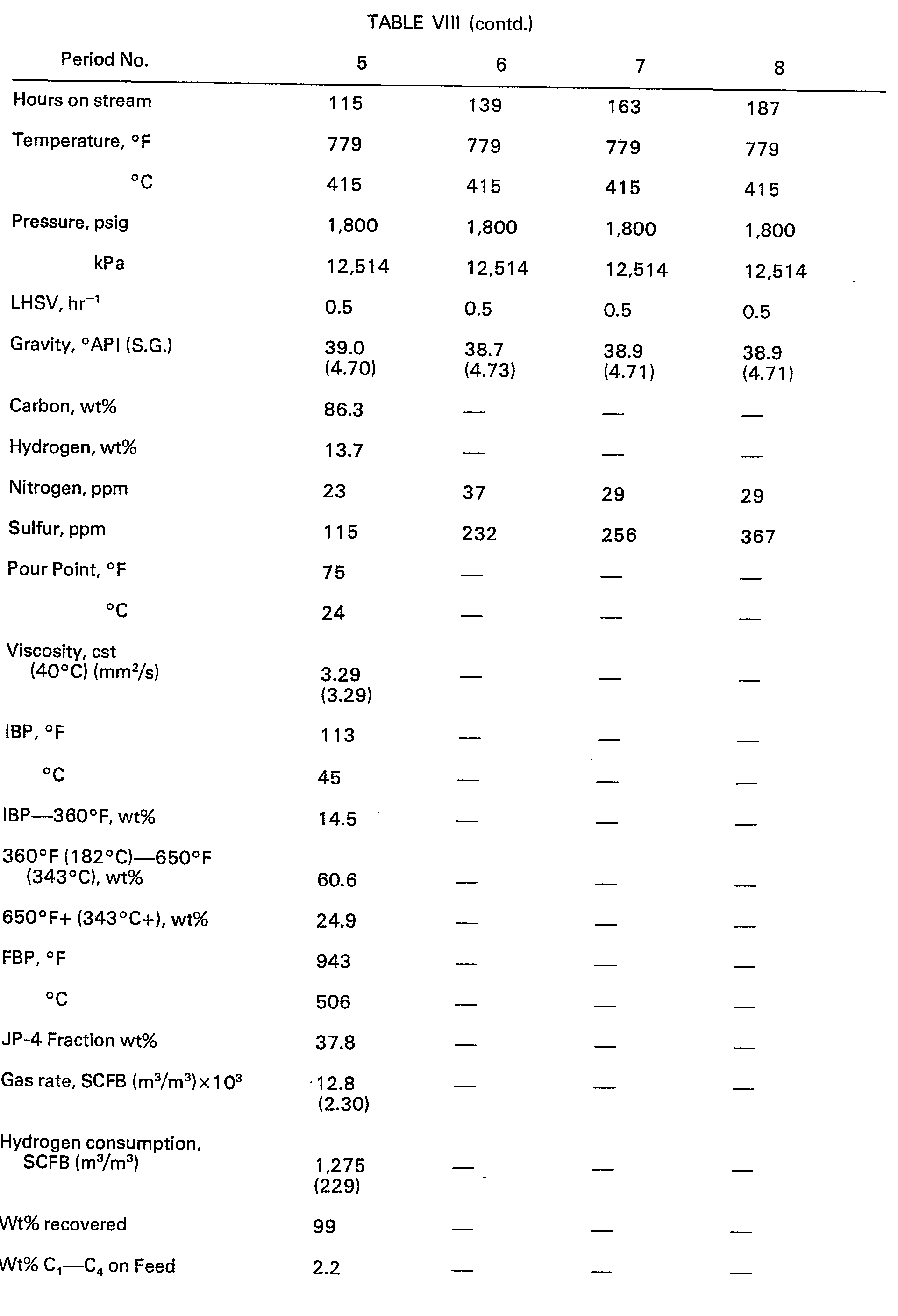

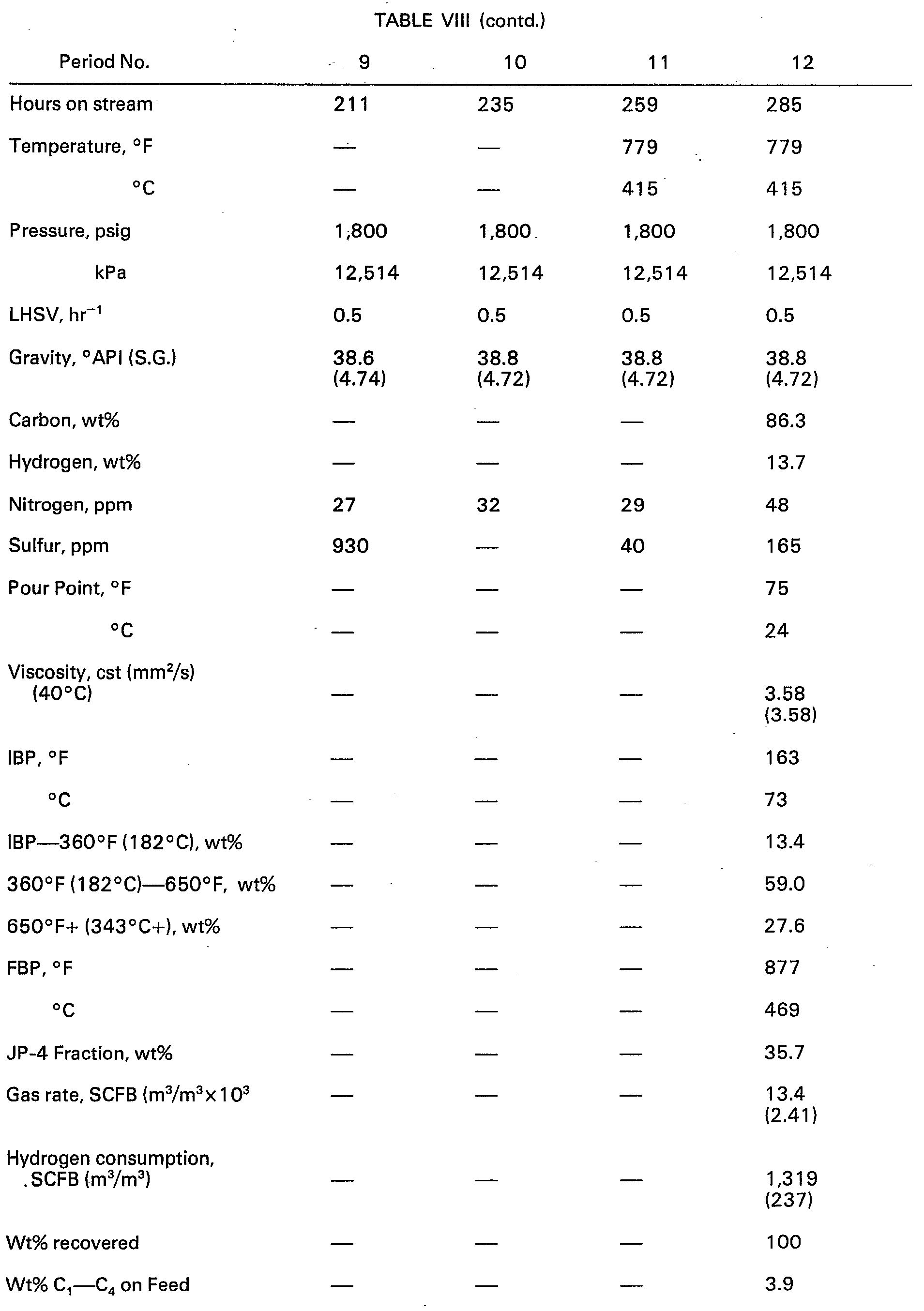

The results shown in Table VIII indicate that Catalyst G provides somewhat better denitrogenation than Catalyst F and hydrocracking that is similar to that provided by Catalysts C and F.

The data that were obtained from those periods of the above-described tests in which weight balances were made are summarized in Table IX hereinbelow.

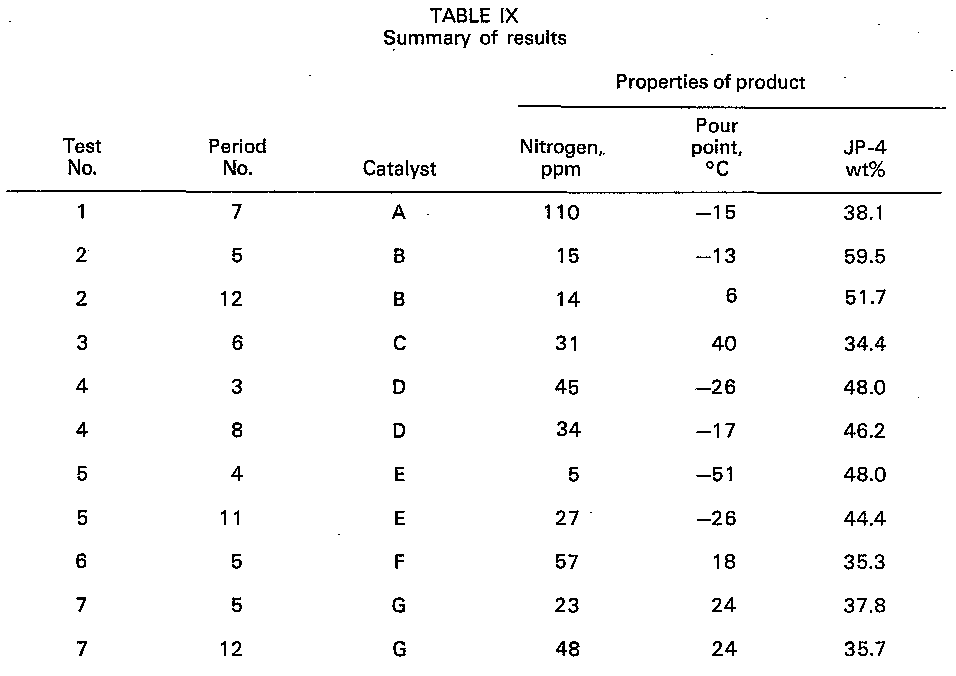

It is interesting to note that each of the molecular sieve-containing catalysts provided better denitrogenation of the shale oil than Catalyst A, the comparative prior-art catalyst which did not contain a molecular sieve zeolite component, and at least comparable hydrocracking. Hence, each, when employed in the process of the present invention, provides an operable and an improved process.

Catalysts B, C, D, E and G provide excellent overall performance, when converting the above-described shale oil. Each performs in an overall manner that is superior to that of the standard catalyst, Catalyst A. While any one of the catalysts discussed hereinabove, except Catalyst A, can be used in the process of the present invention, Catalysts B, C, D, E and G are preferred.

### Example VIII

An eighth catalyst, Catalyst H, was prepared and tested for its ability to hydrodenitrogenate and hydrocrack Feed No. 2, a shale oil, the properties of which are presented hereinafter in Table X.

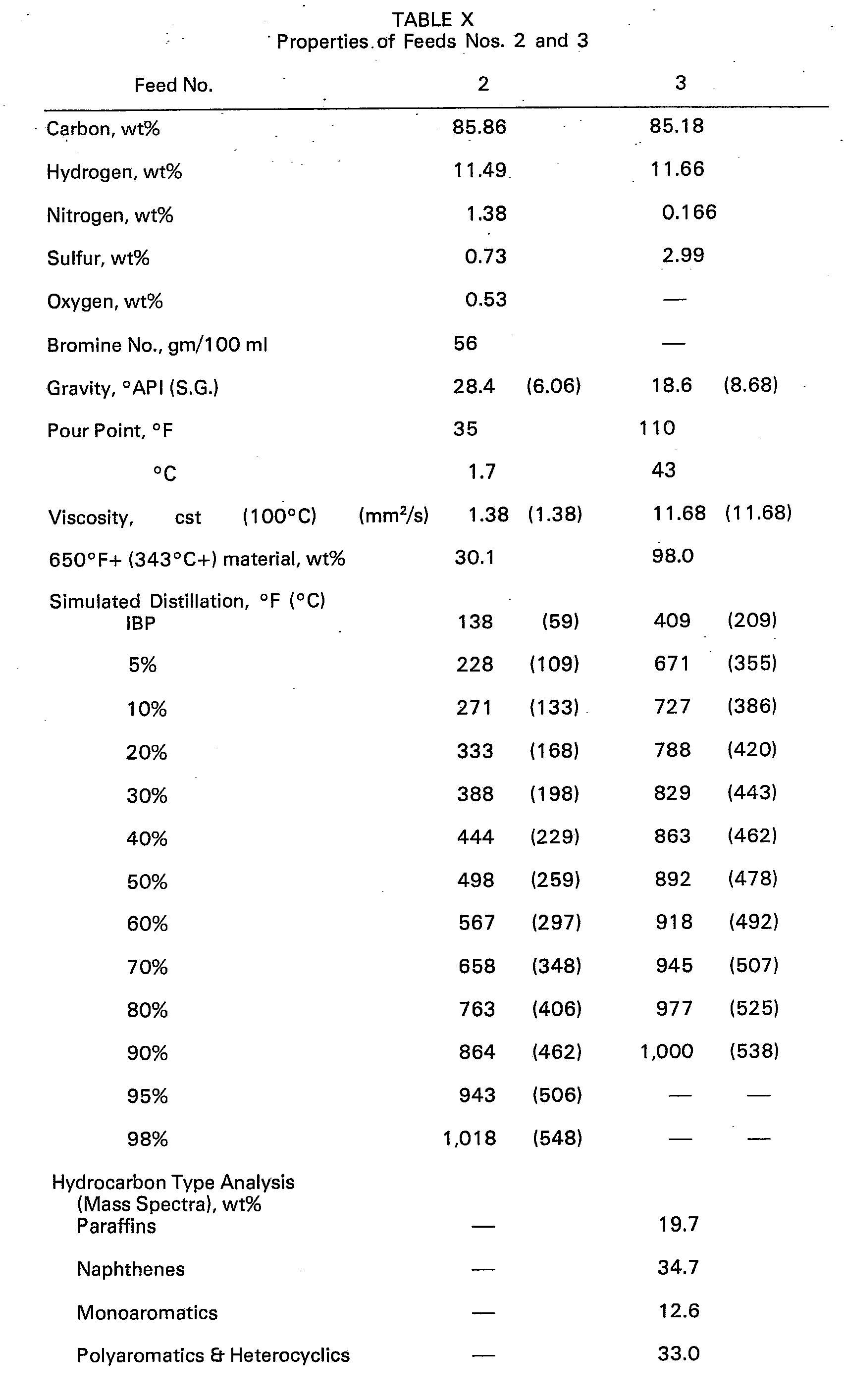

A 90-gram portion of commercially-available rare earth metal-exchanged Y-type molecular sieves was ground and screened to pass through a 100-mesh screen (Tyler) (0.149 mm opening), made up into a paste by the addition of distilled water, and added to 3,600 grams of a PHF-alumina sol (approximately 10 wt% solids) obtained from the America Cyanamid Company. The molecular sieves had been obtained from the Davison Chemical Division of W. R. Grace and Co. The resulting mixture was blended in a large blender for 15 minutes. The, 250 cubic centimeters of a solution that had been prepared by mixing equal amounts of distilled water and concentrated ammonium hydroxide were added to the blend to gel the sol. Two of these batches were made and subsequently combined and dried at a temperature of 250° F (121 °C) for approximately 64 hours (over the weekend) in circulating air. The dried material was then ground and sieved to a 100-mesh material (Tyler) (0.149 mm opening), mulled with distilled water, and extruded as 5/64-inch (2 mm) extrudates. The extrudates were dried for 2 hours at a temperature of 250°F (121°C) and then calcined in air at a temperature of 1,000°F (538°C) for 2 hours. This catalytic support material was prepared to contain 20 wt% rare earth metal-exchanged Y-type molecular sieves in a matrix of alumina.

A 143-gram portion of the above support material was added to a solution that had been prepared by dissolving 33.2 grams of (NH₄)₂Cr₂o₇ in 100 milliliters of distilled water. This mixture was then permitted to stand for 1 hour, again mixed, and then dried in an oven at a temperature of 250°F (121°C) for 2 hours. The dried material was calcined in air overnight (approximately 16 hours) at a temperature of 1,000°F (538°C). The calcined chromium-containing material was subsequently impregnated with a solution that had been prepared by dissolving 27.25 grams of Ni(N03)2. 6H₂0 and 36.80 grams of (NH₄)₆Mo₇O₂₄·4H₂O in 90 milliliters of distilled water. The solution and support material were thoroughly mixed and the mixture was allowed to stand for approximately 1 hour, after which the composite was mixed again and placed in an oven for 2 hours at a temperature of approximately 250°F (121 °C). The dried material was subsequently calcined overnight (approximately 16 hours) at a temperature of 1,000°F (538°C).

The finished catalytic material, Catalyst H, was prepared to contain 3.5 wt% NiO, 15 wt% Mo03, and 10 wt% Cr₂O₃.

A 14.4-cubic centimeter sample of Catalyst H, as 14/20-mesh particles (U.S. Sieve Series), was charged to the reactor of a bench-scale test unit as described hereinabove and was tested for its ability to hydrodenitrogenate and hydrocrack the shale oil identified as Feed No. 2. The results of this test, Test No. 8, are presented hereinbelow in Table XI.

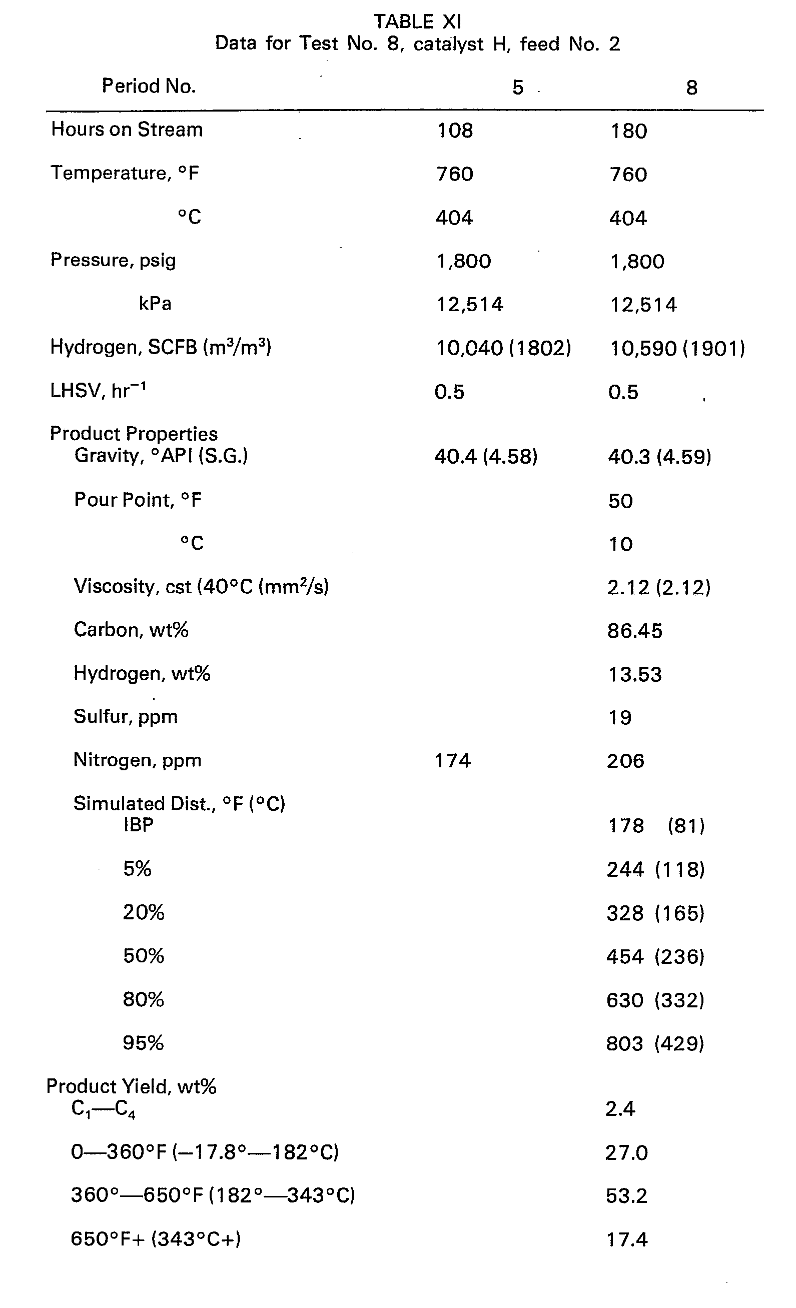

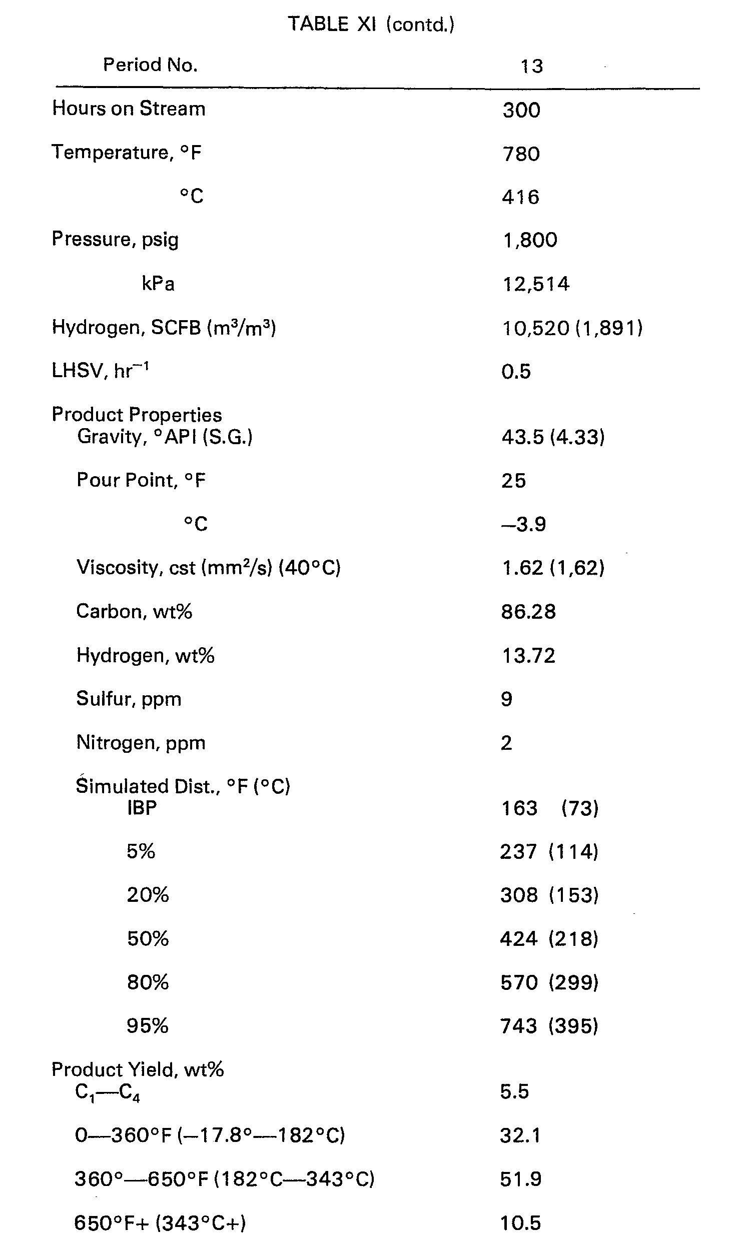

The results shown in Table XI indicate that Catalyst H does provide very good hydrodesulfurization, hydrodenitrogenation, and hydrocracking of Feed No. 2, a shale oil. Hydrocracking is measured by the conversion of the 650°F+ (343°C+) feed to 650°F― (343°C―) products.

### Example IX

Catalyst H was also tested for its ability to convert a heavy vacuum gas oil, Feed No. 3. The properties of Feed No. 3 are presented hereinabove in Table X.

A 16-cubic centimeter portion of Catalyst H was loaded into a test reactor and tested with Feed No. 3 in a bench-scale test unit as described hereinabove. The results of this test, Test No. 9, are presented hereinbelow in Table XII.

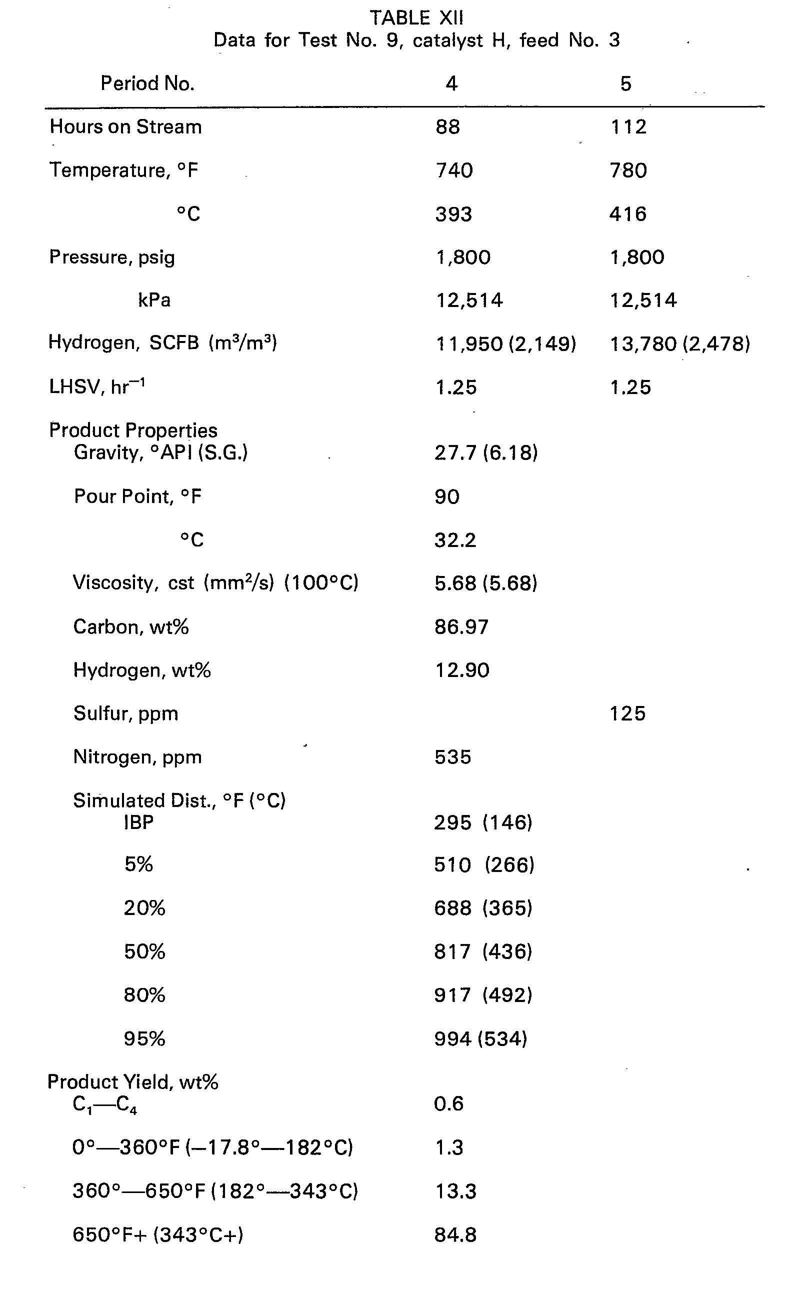

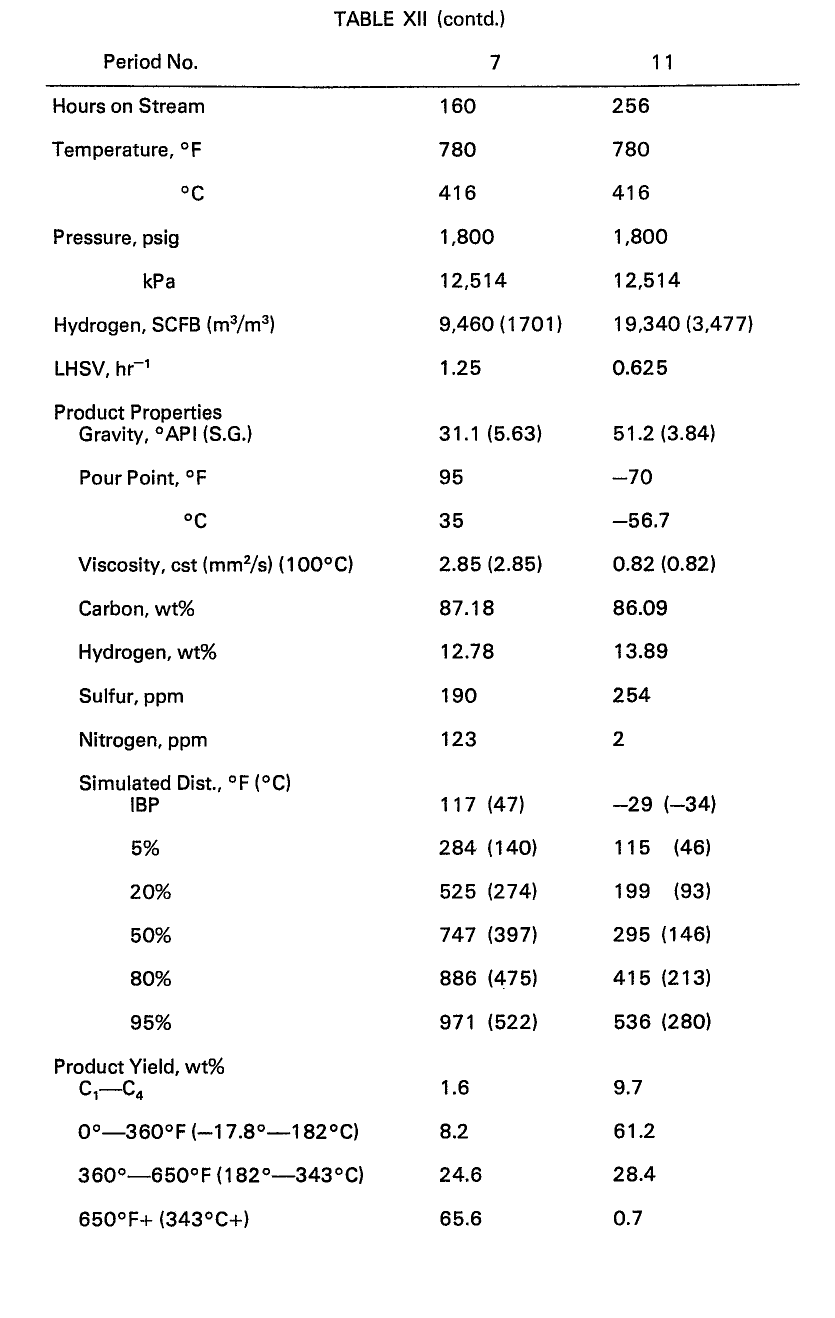

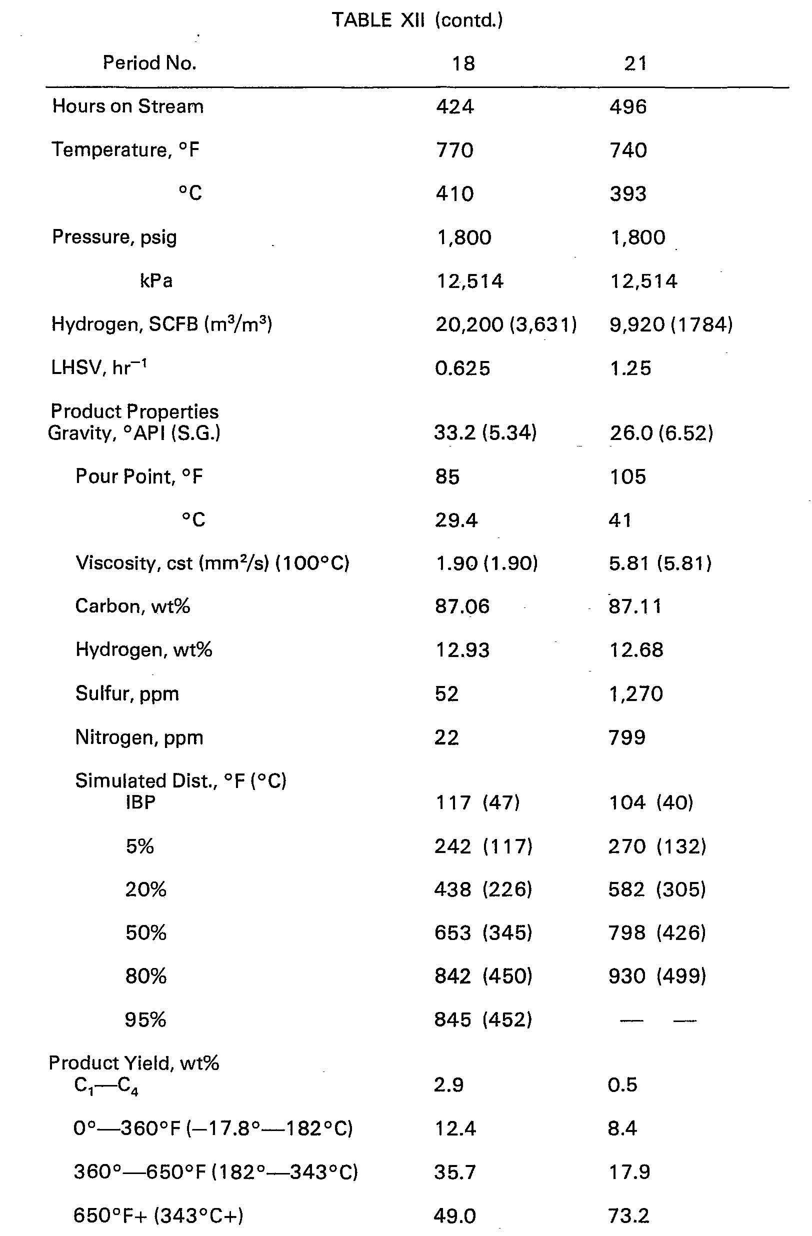

The data presented in Table XII indicate that Catalyst H provides substantial hydrodesulfurization, hydrodenitrogenation, and hydrocracking of this heavy vacuum gas oil, Feed No. 3.

### Example X

A ninth catalyst, Catalyst I, was prepared and tested for its ability to hydrodenitrogenate and hydrocrack Feed No. 2, the shale oil.

A 359.71-gram portion of the rare earth metal-exchanged Y-type molecular sieves obtained from Davison Chemical Division of W. R. Grace and Co. was ground and screened to pass through a 100- mesh screen (Tyler) (0.149 mm opening) and mixed with 700 milliliters of distilled water. The resulting paste was added to 3,558 grams of a PHF-alumina sol (approximately 10 wt.% solids) obtained from the American Cyanamid Company. The resulting composite was blended for 10 minutes. Then, a solution prepared by adding 200 milliliters of concentrated ammonium hydroxide to 200 milliliters of distilled water was rapidly added to the blended material to form a gel. The gel was subsequently dried in air in an oven for 42 hours at a temperature of 250°F (121 °C). The dried material was then ground to pass through a 100-mesh screen (Tyler) (0.149 mm opening). The ground material was mulled with distilled water and extruded as 5/64-inch (2 mm) extrudates, which were dried overnight (approximately 16 hours) in air at a temperature of 250°F (121°C) and then calcined in air at a temperature of 1,000°F (538°C) for 4 hours.

A 143-gram portion of this support material, which was prepared to contain 50 wt% molecular sieves in a matrix of alumina, was added to a solution that had been prepared by dissolving 33.2 grams of (NH₄)₂Cr₂O₇ in 130 milliliters of distilled water. After the excess liquid had been removed under a heat lamp, the impregnated material was dried in an oven in air for at least 2 hours at a temperature of 250°F (121°C) and then calcined in air for 2 hours at a temperature of 1,000°F (538°C). The calcined chromium-containing material was then impregnated with a solution that had been prepared by first dissolving 36.8 grams of (NH₄)₆Mo₇O₂₄·4H₂O in 120 milliliters of water to form a molybdenum-containing solution and then dissolving 27.25 grams of Ni(NO₃)₂. 6H₂O in the molybdenum-containing solution. The excess liquid was removed under a heat lamp, and the material was then dried in air in an oven at a temperature of 250°F (121°C) for at least 2 hours and calcined in air for 2 hours at a temperature of 1,000°F (538°C). The finished Catalyst I was prepared to contain 3.5 wt% NiO, 10 wt% Cr₂0₃, and 15 wt% Mo03.

A 14.4-cubic centimeter sample of Catalyst I in the form of 14/20-mesh particles (U.S. Sieve Series), (1.19 mm/0.841 mm opening) was charged to the reactor of a bench-scale test unit as described hereinabove and was tested for its ability to hydrodenitrogenate and hydrocrack Feed No. 2. The results of this test, Test No. 10, are presented hereinbelow in Table XIII.

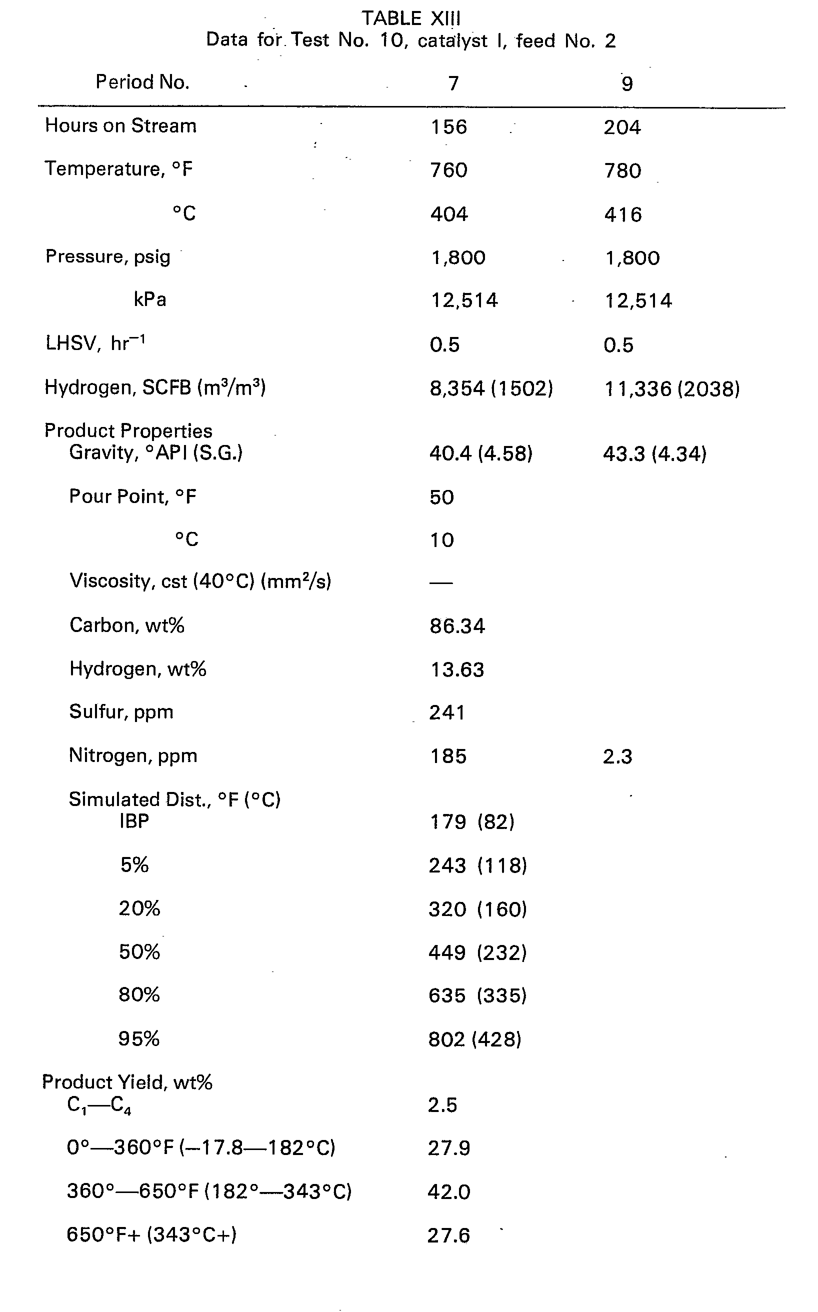

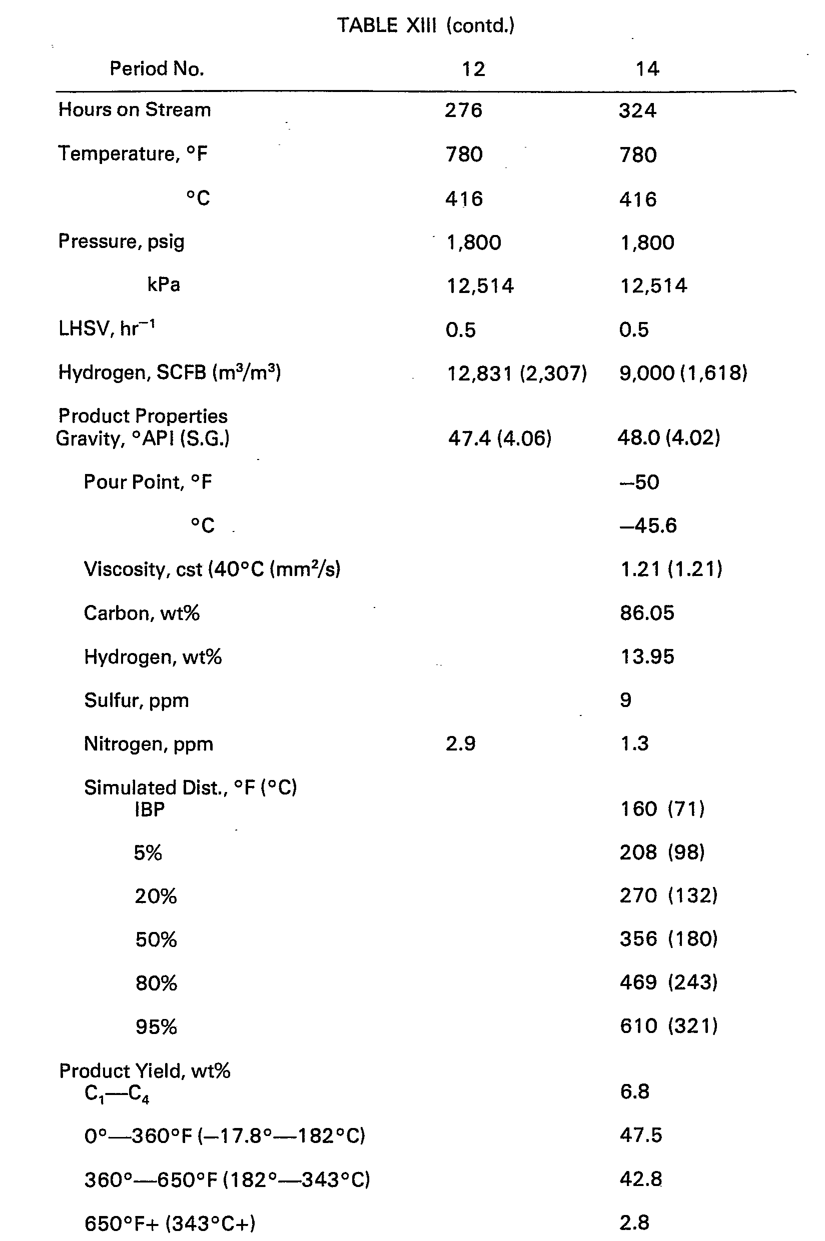

The results presented in Table XIII demonstrate that Catalyst I is suitable for hydrodesulfurization, hydrodenitrogenation, and hydrocracking of Feed No. 2, a shale oil.

Catalysts H and I are preferred embodiments of the catalyst of the present invention.

They, as well as the other preferred catalysts of the present invention, are not only suitable for the conversion of whole shale oils and any fraction thereof, but also are suitable for the hydrodenitrogenation and hydrocracking of other distillate hydrocarbon streams containing high concentrations of nitrogen, such as hydrocarbons derived from coal, hydrocarbons derived from tar sands, and petroleum hydrocarbon distillates.

## Claims (Claims for the following Contracting State(s) : s: BE, CH, DE, FR, GB, IT, LI, NL, SE)

1. A catalyst which comprises (1) a hydrogenation component comprising chromium, molybdenum, and at least one Group VIII metal wherein the metals of said hydrogenation component are present in the elemental form, as oxides, as sulfides, or as mixtures thereof and (2) a porous refractory inorganic oxide, characterised in that said catalyst also comprises (3) a crystalline molecular sieve zeolite having a pore diameter of at least 5 A (0.5 nm) and containing exchangeable cations.

2. The catalyst of Claim 1, wherein said metal of Group VIII, said molybdenum, and said chromium are deposited upon a support comprising said molecular sieve zeolite suspended in and distributed throughout a matrix of said refractory inorganic oxide.

3. The catalyst of Claim 1, wherein said metal of Group VIII, said molybdenum, and said chromium are deposited upon said refractory inorganic oxide, said refractory inorganic oxide being intimately admixed in a physical particulate mixture with said molecular sieve zeolite.

4. The catalyst of any of Claims 1 to 3, wherein said molecular sieve zeolite is selected from the group consisting of a faujasite-type crystalline aluminosilicate, a mordenite-type crystalline aluminosilicate, a ZSM-5 crystalline aluminosilicate, and an AMS-type crystalline metallosilicate.

5. The catalyst of any of Claims 1 to 3, wherein said molecular sieve zeolite is a member selected from the group consisting of an ultrastable, large-pore crystalline aluminosilicate material, a crystalline Y-type aluminosilicate, a rare earth metal-exchanged Y-type aluminosilicate material, a ZSM-5 crystalline aluminosilicate, and an AMS-1 B crystalline borosilicate.

6. The catalyst of any of Claims 1 to 5, wherein said refractory inorganic oxide is a catalytically active alumina.

7. The catalyst of any of Claims 1 to 6, wherein said molecular sieve zeolite is present in an amount within the range of 5 wt% to 90 wt%, based upon the weight of said support.

8. The catalyst of any of Claims 1 to 7, wherein said metal of Group VIII is a non-noble metal present in an amount within the range of 0.5 wt% to 10 wt%, calculated as the oxide of the metal, said molybdenum is present in an amount within the range of 5 wt% to 25 wt%, calculated as Mo03, and said chromium is present in an amount within the range of 3 wt% to 15 5 wt%, calculated as Cr₂o.. each amount being based upon the weight of said catalyst.

9. The catalyst of any of Claims 1 to 8, wherein said metal of Group VIII is nickel or cobalt.

10. The catalyst of any of Claims 1 to 8, wherein said metal of Group VIII is cobalt.

11. The catalyst of any of Claims 1 to 3 and 5 to 10, wherein said molecular sieve zeolite is an ultrastable, large-pore crystalline aluminosilicate material.

12. The catalyst of any of Claims 1 to 3 and 5 to 10, wherein said molecular sieve zeolite is a rare earth metal-exchanged Y-type aluminosilicate material.

13. The catalyst of any of Claims 1 to 3 and 5 to 10, wherein said molecular sieve zeolite is a ZSM-5 aluminosilicate.

14. The catalyst of any of Claims 1 to 3 and 5 to 10, wherein said molecular sieve zeolite is an AMS-1 B crystalline borosilicate.

15. The catalyst of any of Claims 1 to 3 and 5 to 10, wherein said molecular sieve zeolite is a crystalline Y-type aluminosilicate.

16. A process for the hydrodenitrogenation and hydrocracking of a hydrocarbon stream containing a substantial amount of nitrogen compounds, which process comprises contacting said stream in a reaction zone in the presence of hydrogen with a presulfided catalyst of any of Claims 1 to 15, wherein the metals of said hydrogenation component are present in the elemental form as oxides, as sulfides or as mixtures thereof.

17. The process of Claim 16, wherein said hydrocarbon stream is selected from the group consisting of petroleum hydrocarbon distillates, liquids derived from coal, liquids derived from tar sands, and whole shale oil or any fraction of shale oil.

18. A process for the hydrodenitrogenation and hydrocracking of a hydrocarbon stream comprising whole shale oil or any fraction thereof to produce jet fuel components, which process comprises contacting said stream in a reaction zone in the presence of hydrogen with a presulfided catalyst of any of'Claims 1 to 15, wherein the metals of said hydrogenation component are present in the elemental form, as oxides, as sulfides, or as mixtures thereof.

19. The process of any of Claims 16 to 18, wherein said conditions comprise a temperature within the range of 700°F (371 °C) to 800°F (427°C), a pressure within the range of 1,000 psi (6,890 kPa) to 2,500 psi (17,225 kPa), a LHSV within the range of 0.1 volume of hydrocarbon per hour per volume of catalyst to 5 volumes of hydrocarbon per hour per volume of catalyst, a hydrogen addition rate or hydrogen recycle rate within the range of 2,000 SCFB (359 m³/m³) to 20,000 SCFB (3,596 m³/m³), and a hydrogen-to-hydrocarbon molar ratio within the range of 3 moles of hydrogen per mole of hydrocarbon to 60 moles of hydrogen per mole of hydrocarbon.

## Claims (Claims for the following Contracting State(s) : AT)

1. A process for making a catalyst which includes (1) a hydrogenation component comprising chromium, molybdenum, and at least one Group VIII metal, wherein the metals of said hydrogenation component are present in the elemental form, as oxides, as sulfides, or as mixtures thereof and (2) a porous refractory inorganic oxide, characterised in that a crystalline molecular sieve zeolite (3) having a pore diameter of at least 5 A (0.5 nm) and containing exchangeable cations is combined with said hydrogenation component (1) and said porous refractory inorganic oxide (2).

2. The process of Claim 1, wherein said metal of Group VIII, said molybdenum, and said chromium are deposited upon a support comprising said molecular sieve zeolite suspended in and distributed throughout a matrix of said refractory inorganic oxide.

3. The process of Claim 1, wherein said metal of Group VIII, said molybdenum, and said chromium are deposited upon said refractory inorganic oxide, said refractory inorganic oxide being intimately admixed in a physical particulate mixture with said molecular sieve zeolite.

4. The process of any of Claims 1 to 3, wherein said molecular sieve zeolite is selected from the group consisting of a faujasite-type crystalline aluminosilicate, a mordenite-type crystalline aluminosilicate, a ZSM-5, crystalline aluminosilicate, and an AMS-type crystalline metallosilicate.

5. The process of any of Claims 1 to 3, wherein said molecular sieve zeolite is a member selected from the group consisting of an ultrastable, large-pore crystalline aluminosilicate material, a crystalline Y-type aluminosilicate, a rare earth metal-exchange Y-type aluminosilicate, material, a ZSM-5 crystalline aluminosilicate, and an AMS-1 B crystalline borosilicate.

6. The process of any of Claims 1 to 5, wherein said refractory inorganic oxide is a catalytically active alumina.

7. The process of any of Claims 1 to 6, wherein said molecular sieve zeolite is present in an amount within the range of 5 wt% to 90 wt%, based upon the weight of said support.

8. The process of any of Claims 1 to 7, wherein said metal of Group VIII is a non-noble metal present in an amount within the range of 0.5 wt% to 10 wt%, calculated as the oxide of the metal, said molybdenum is present in an amount within the range of 5 wt% to 25 wt%, calculated as Mo03, and said chromium is present in an amount within the range of 3 wt% to 15 wt%, calculated as Cr_{z}0₃, each amount being based upon the weight of said catalyst.

9. The process of any of Claims 1 to 8, wherein said metal of Group VIII is nickel or cobalt.

10. The process of any of Claims 1 to 8, wherein said metal of Group VIII is cobalt.

11. The process of any of Claims 1 to 3 and 5 to 10, wherein said molecular sieve zeolite is an ultrastable, large-pore crystalline aluminosilicate material.

12. The process of any of Claims 1 to 3 and 5 to 10, wherein said molecular sieve zeolite is a rare earth metal-exchanged Y-type aluminosilicate material.

13. The process of any of Claims 1 to 3 and 5 to 10, wherein said molecular sieve zeolite is a ZSM-5 aluminosilicate.

14. The process of any of Claims 1 to 3 and 5 to 10, wherein said molecular sieve zeolite is an AMS-1 B crystalline borosilicate.

15. The process of any of Claims 1 to 3 and 5 to 10, wherein said molecular sieve zeolite is a crystalline Y-type aluminosilicate.

16. A process for the hydrodenitrogenation and hydrocracking of a hydrocarbon stream containing a substantial amount of nitrogen compounds, which process comprises contacting said stream in a reaction zone in the presence of hydrogen with a presulfided catalyst made by the process of any of Claims 1 to 15, wherein the metals of said hydrogenation component are present in the elemental form as oxides, as sulfides, or as mixtures thereof.

17. The process of Claim 16, wherein said hydrocarbon stream is selected from the group consisting of petroleum hydrocarbon distillates, liquids derived from coal, liquids derived from tar sands, and whole shale oil or any fraction of shale oil.

18. A process for the hydrodenitrogenation and hydrocracking of a hydrocarbon stream comprising whole shale oil or any fraction thereof to produce jet fuel components, which process comprises contacting said stream in a reaction zone in the presence of hydrogen with a presulfided catalyst made by the process of any of Claims 1 to 15, wherein the metals of said hydrogenation component are present in the elemental form, as oxides, as sulfides, or as mixtures thereof.

19. The process of any of Claims 16 to 18, wherein said conditions comprise a temperature within the range of 700°F (371 °C) to 800°F (427°C), a pressure within the range of 1,000 psi (6,890 kPa) to 2,500 psi (17,225 kPa), a LHSV within the range of 0.1 volume of hydrocarbon per hour per volume of catalyst to 5 volumes of hydrocarbon per hour per volume of catalyst, a hydrogen addition rate or hydrogen recycle rate within the range of 2,000 SCFB (359 m³/m³) to 20,000 SCFB (3,596 m³/m³), and a hydrogen-to-hydrocarbon molar ratio within the range of 3 moles of hydrogen per mole of hydrocarbon to 60 moles of hydrogen per mole of hydrocarbon.

## Patentansprüche (Patentansprüche für folgende(n) Vertragsstaat(en) : BE, CH, DE, FR, GB, IT, LI, NL, SE)

1. Katalysator umfassend (1) eine Hydrierungskomponente, die Chrom, Molybdän und zumindest ein Metall der Gruppe VIII umfaßt, wobei die Metalle der Hydrierungskomponente in elementarer Form, als Oxide, als Sulfide oder in Form von deren Gemischen vorliegen, und (2) ein poröses, feuerfestes anorganisches Oxid, dadurch gekennzeichnet, daß der Katalysator zusätzlich (3) einen kristallinen Molekularsiebzeolith mit einem Porendurchmesser von zumindest 5 A (0,5 nm), der austauschbare Kationen enthält, umfaßt.

2. Katalysator gemäß Anspruch 1, dadurch gekennzeichnet, daß das Metall der Gruppe VIII, das Molybdän und das Chrom auf einem Träger abgeschieden sind, der den Molekularsiebzeolith, suspendiert in und verteilt durch eine Matrix hindurch aus dem feuerfesten anorganischen Oxid, umfaßt.

3. Katalysator gemäß Anspruch 1, dadurch gekennzeichnet, daß das Metall der Gruppe VIII, das Molybdän und das Chrom auf dem feuerfesten anorganischen Oxid abgeschieden sind, wobei das feuerfeste anorganische Oxid innig in Form einer physikalischen teilchenförmigen Mischung mit dem Molekularsiebzeolith gemischt ist.

4. Katalysator gemäß einem der Ansprüche 1 bis 3, dadurch gekennzeichnet, daß der Molekularsiebzeolith ausgewählt ist unter einem kristallinen Aluminosilicat vom Faujasit-Typ, einem kristallinen Aluminosilicat vom Mordenit-Typ, einem ZSM-5 kristallinen Aluminosilicat und einem kristallinen Metallosilicat vom AMS-Typ.

5. Katalysator gemäß einem der Ansprüche 1 bis 3, dadurch gekennzeichnet, daß der Molekularsiebzeolith ausgewählt ist unter einem ultrastabilen, großporigen kristallinen Aluminosilicat- material, einem kristallinen Aluminosilicat vom Y-Typ, einem Aluminosilicatmaterial vom seltenen Erden-Metall-ausgetauschten Y-Typ, einem ZSM-5 kristallinen Aluminosilicat und einem AMS-1 B kristallinen Borsilicat.

6. Katalysator gemäß einem der Ansprüche 1 bis 5, dadurch gekennzeichnet, daß das feuerfeste, anorganische Oxid ein Katalytisch aktives Aluminiumoxid ist.

7. Katalysator gemäß einem der Ansprüche 1 bis 6, dadurch gekennzeichnet, daß der Molekularsiebzeolith in einer Menge im Bereich von 5 Gew.-% bis 90 Gew.-%, bezogen auf das Gewicht des Trägers, vorhanden ist.

8. Katalysator gemäß einem der Ansprüche 1 bis 7, dadurch gekennzeichnet, daß das Metall der Gruppe VIII ein Nicht-Edelmetall ist, das in einer Menge im Bereich von 0,5 Gew.-% bis 10 Gew.-%, berechnet als Oxid des Metalls, anwesend ist, wobei das Molybdän in einer Menge im Bereich von 5 Gew.-% bis 25 Gew.-%, berechnet als Mo03, anwesend ist und das Chrom in einer Menge im Bereich von 3 Gew.-% bis 15 Gew.-%, berechnet als Cr_{Z}0₃, anwesend ist, wobei jede Menge auf das Gewicht des Katalysators bezogen ist.

9. Katalysator gemäß einem der Ansprüche 1 bis 8, dadurch gekennzeichnet, daß das Metall der Gruppe VIII Nickel oder Kobalt ist.

10. Katalysator gemäß einem der Ansprüche 1 bis 8, dadurch gekennzeichnet, daß das Metall der Gruppe VIII Kobalt ist.

11. Katalysator gemäß einem der Ansprüche 1 bis 3 und 5 bis 10, dadurch gekennzeichnet, daß der Molekularsiebzeolith ein ultrastabiles, großporiges, kristallines Aluminosilicat-material ist.

12. Katalysator gemäß einem der Ansprüche 1 bis 3 und 5 bis 10, dadurch gekennzeichnet, daß der Molekularsiebzeolith ein Aluminosilicatmaterial vom seltenen Erden-Metall-ausgetauschten Y-Typ ist.

13. Katalysator gemäß einem der Ansprüche 1 bis 3 und 5 bis 10, dadurch gekennzeichnet, daß der Molekularsiebzeolith ein ZSM-5 Aluminosilicat ist.

14. Katalysator gemäß einem der Ansprüche 1 bis 3 und 5 bis 10, dadurch gekennzeichnet, daß der Molekularsiebzeolith ein AMS-1B kristallines Borsilicat ist.

15. Katalysator gemäß einem der Ansprüche 1 bis 3 und 5 bis 10, dadurch gekennzeichnet, daß der Molekularsiebzeolith ein kristallines Aluminosilicat vom Y-Typ ist.

16. Verfahren zur Hydrodenitrogenierung und Hydrocrackung eines eine beträchtliche Menge an Stickstoffverbindungen enthaltenden Kohlenwasserstoffstroms, dadurch gekennzeichnet, daß es das Inkontaktbringen des Stroms in einer Reaktions-zone in Gegenwart von Wasserstoff mit einem presulfidierten Katalysator gemäß einem der Ansprüche 1 bis 15 umfaßt, wobei die Metalle der Hydrierungskomponente in elementarer Form, als Oxide, als Sulfide oder in Form von deren Gemischen anwesend sind.

17. Verfahren gemäß Anspruch 16, dadurch gekennzeichnet, daß der Kohlenwasserstoffstrom ausgewählt wird unter Erdölkohlenwasserstoffdestillaten, der Kohle entstammenden Flüssigkeiten, Schwerölsanden entstammenden Flüssigkeiten und vollständigem Schieferöl oder irgendeiner Schieferölfraktion.

18. Verfahren zur Hydrodenitrogenierung und Hydrocrackung eines ein vollständiges Schieferöl oder irgendeine Fraktion hiervon umfassenden Kohlenwasserstoffstroms zur Herstellung von Düsenkraftstoffkomponenten, dadurch gekennzeichnet, daß es das Inkontaktbringen des Stroms in einer Reaktionszone in Gegenwart von Wasserstoff mit einem presulfidierten Katalysator gemäß einem der Ansprüche 1 bis 15 umfaßt, in dem die Metalle der Hydrierungskomponente in elementarer Form, als Oxide, als Sulfide oder in Form von deren Gemischen vorliegen.

19. Verfahren gemäß einem der Ansprüche 16 bis 18, dadurch gekennzeichnet, daß die Bedingungen eine Temperatur im Bereich von 700°F (371 °C) bis 800°F (427°C), einen Druck im Bereich von 1000 psi (6890 kPa) bis 2500 psi (17225 kPa), eine LHSV bzw. stündliche Flüssigkeits-Raumgeschwindigkeit im Bereich von 0,1 Volumen Kohlenwasserstoff je Stunde je Volumen Katalysator bis 5 Volumir,a Kohlenwasserstoff je Stunde je Volumen Katalysator, eine Wasserstoffzugaberate oder Wasserstoffrecyclisierungsrate im Bereich von 2000 SCFB (359 m³/m³) bis 20000 SCFB (3596 m³/m³) und ein Wasserstoff-zu-Kohlenwasserstoff-Molverhältnis im Bereich von 3 Mol Wasserstoff je Mol Kohlenwasserstoff bis 60 Mol Wasserstoff je Mol Kohlenwasserstoff umfassen.

## Patentansprüche (Patentansprüche für folgende(n) Vertragsstaat(en) : AT)

1. Verfahren zur Herstellung eines Katalysators, der umfaßt: (1) eine Hydrierungskomponente, umfassend Chrom, Molybdän und zumindest ein Metall der Gruppe VIII, worin die Metalle der Hydrierungskomponente in elementarer Form, als Oxide, als Sulfide oder in Form, von deren Gemischen vorliegen, und (2) ein poröses, feuerfestes, anorganisches Oxid, dadurch gekennzeichnet, daß ein kristalliner Molekularsiebzeolith (3) mit einem Porendurchmesser von zumindest 5 A (0,5 nm), der austauschbare Kationen enthält, mit der Hydrierungskomponente (1) und dem porösen, feuerfesten, anorganischen Oxid (2) kombiniert ist.

2. Verfahren gemäß Anspruch 1, dadurch gekennzeichnet, daß das Metall der Gruppe VIII. das Molybdän und das Chrom auf einem Träger abgeschieden sind, der den Molekularsiebzeolith, suspendiert in und verteilt durch eine Matrix des feuerfesten, anorganischen Oxids hindurch, umfaßt.

3. Verfahren gemäß Anspruch 1, dadurch gekennzeichnet, daß das Metall der gruppe VIII, das Molybdän und das Chrom auf dem feuerfesten, anorganischen Oxid abgeschieden sind, wobei das feuerfeste, anorganische Oxid innig in Form einer physikalischen teilchenförmigen Mischung mit dem Molekularsiebzeolith gemischt ist.

4. Verfahren gemäß einem der Ansprüche 1 bis 3, dadurch gekennzeichnet, daß der Molekularsiebzeolith ausgewählt ist unter einem kristallinen Aluminosilicat vom Faujasit-Typ, einem kristallinen Aluminosilicat vom Mordenit-Typ, einem ZSM-5 kristallinen Aluminosilicat und einem kristallinen Metallosilicat von AMS-Typ.

5. Verfahren gemäß einem der Ansprüche 1 bis 3, dadurch gekennzeichnet, daß der Molekularsiebzeolith ausgewählt ist unter einem ultrastabilen, großporigen, kristallinen Aluminosilicat- material, einem kristallinen Aluminosilicat vom Y-Typ, einem Aluminosilicatmaterial vom seltenen Erden-Metall-ausgetauschten Y-Typ, einem ZSM-5 kristallinen Aluminosilicat und einem AMS-1B kristallinen Borsilicat.

6. Verfahren gemäß einem der Ansprüche 1 bis 5, dadurch gekennzeichnet, daß das feuerfeste anorganische Oxid ein katalytisch aktives Aluminiumoxid ist.

7. Verfahren gemäß einem der Ansprüche 1 bis 6, dadurch gekennzeichnet, daß der Molekularsiebzeolith in einer Menge im Bereich von 5 Gew.-% bis 90 Gew.-%, bezogen auf das Gewicht des Trägers, vorhanden ist.

8. Verfahren gemäß einem der Ansprüche 1 bis 7, dadurch gekennzeichnet, daß das Metall der Gruppe VIII ein Nicht-Edelmetall ist, das in einer Menge im Bereich von 0,5 Gew.-% bis 10 Gew.-%, berechnet als das Oxid des Metalls, vorhanden ist, das Molybdän in einer Menge im Bereich von 5 Gew.-% bis 25 Gew.-%, berechnet als Mo03, vorhanden ist und das Chrom in einer Menge im Bereich von 3 Gew.-% bis 15 Gew.-%, berechnet als Cr_{z}0₃, vorhanden ist, wobei jede Menge auf das Gewicht des Katalysators bezogen ist.

9. Verfahren gemäß einem der Ansprüche 1 bis 8, dadurch gekennzeichnet, daß das Metall der Gruppe VIII Nickel oder Kobalt ist.

10. Verfahren gemäß einem der Ansprüche 1 bis 8, dadurch gekennzeichnet, daß das Metall der Gruppe VIII Kobalt ist.

11. Verfahren gemäß einem der Ansprüche 1 bis 3 und 5 bis 10, dadurch gekennzeichnet, daß der Molekularsiebzeolith ein ultrastabiles, großporiges, kristallines Aluminosilicatmaterial ist.

12. Verfahren gemäß einem der Ansprüche 1 bis 3 und 5 bis 10, dadurch gekennzeichnet, daß der Molekularsiebzeolith ein Aluminosilicatmaterial vom seltenen Erden-Metall-ausgetauschten Y-Typ ist.

13. Verfahren gemäß einem der Ansprüche 1 bis 3 und 5 bis 10, dadurch gekennzeichnet, daß der Molekularsiebzeolith ein ZSM-5 Aluminosilicat ist.

14. Verfahren gemäß einem der Ansprüche 1 bis 3 und 5 bis 10, dadurch gekennzeichnet, daß der Molekularsiebzeolith ein AMS-1 B kristallines Borsilicat ist.

15. Verfahren gemäß einem der Ansprüche 1 bis 3 und 5 bis 10, dadurch gekennzeichnet, daß der Molekularsiebzeolith ein kristallines Aluminosilicat vom Y-Typ ist.

16. Verfahren zur Hydrodenitrogenierung und Hydrocrackung eines eine beträchtliche Menge an Stickstoffverbindungen enthaltenden Kohlenwasserstoffstroms, dadurch gekennzeichnet, daß es das Inkontaktbringen des Stroms in einer Reaktionszone in Gegenwart von Wasserstoff mit einem presulfidierten Katalysator, hergestellt durch ein Verfahren gemäß einem der Ansprüche 1 bis 15, umfaßt, wobei die Metalle der Hydrierungskomponente in elementarer Form, als Oxide, als Sulfide oder als Gemische hiervon vorhanden sind.

17. Verfahren gemäß Anspruch 16, dadurch gekennzeichnet, daß der Kohlenwasserstoffstrom ausgewählt wird unter Erdölkohlenwasserstoffdestillaten, sich von Kohle ableitenden Flüssigkeiten, sich von Schwerölsanden ableitenden Flüssigkeiten und vollständigem Schieferöl oder irgendeiner Schieferölfraktion.

18. Verfahren zur Hydrodenitrogenierung und Hydrocrackung eines Kohlenwasserstoffstroms, der ein vollständiges Schieferöl oder irgendeine Fraktion hiervon umfaßt, zur Herstellung von Düsenkraftstoffkomponenten, dadurch gekennzeichnet, daß es das Inkontaktbringen des Stroms in einer Reaktionszone in Gegenwart von Wasserstoff mit einem presulfidierten Katalysator, hergestellt durch ein Verfahren gemäß einem der Ansprüche 1 bis 15, umfaßt, wobei die Metalle der Hydrierungskomponente in elementarer Form, als Oxide, als Sulfide oder in Form von deren Gemischen vorhanden sind.

19. Verfahren gemäß einem der Ansprüche 16 bis 18, dadurch gekennzeichnet, daß die Bedingungen eine Temperatur im Bereich von 700°F (371 °C) bis 800°F (427°C), einen Druck im Bereich von 1000 psi (6890 kPa) bis 2500 psi (17225 kPa), eine LHSV bzw. stündliche Flüssigkeits-Raumgeschwindigkeit im Bereich von 0,1 Volumen Kohlenwasserstoff je Stunde je Volumen Katalysator bis 5 Volumina Kohlenwasserstoff je Stunde je Volumen Katalysator, eine Wasserstoffzugaberate oder Wasserstoffrecyclisierungsrate im Bereich von 2000 SCFB (359 m³/m³) bis 20000 SCFB (3596 m³/m³), und ein Wasserstoff-zu-Kohienwasserstoff-Molverhältnis im Bereich von 3 Mol Wasserstoff je Mol Kohlenwasserstoff bis 60 Mol Wasserstoff je Mol Kohlenwasserstoff umfassen.

## Revendications (Revendications pour l'(les) Etat(s) contractant(s) suivant(s) : BE, CH, DE, FR, GB, IT, LI, NL, SE)

1. Un catalyseur qui comprend (1) un composant d'hydrogénation comprenant le chrome, le molybdène, et au moins un métal du groupe VIII dans lequel les métaux dudit composant d'hydrogénation sont présents sous la forme d'éléments, comme oxydes, comme sulfures, ou comme mélanges de ceux-ci et (2) un oxyde inorganique réfractaire poreux, caractérisé en ce que le catalyseur comprend également (3) une zéolite tamis moléculaire cristallisée ayant un diamètre de pore d'au moins 5 A (0,5 nm) et contenant des cations échangeables.

2. Le catalyseur de la revendication 1, dans lequel ledit métal du groupe VIII, ledit molybdène, et ledit chrome sont déposés sur un support comprenant ladite zéolite tamis moléculaire en suspension dans celui-ci et distribuée dans une matrice dudit oxyde inorganique réfractaire.

3. Le catalyseur de la revendication 1, dans lequel ledit métal du groupe VIII, ledit molybdène, et ledit chrome sont déposés sur ledit oxyde inorganique réfractaire, ledit oxyde inorganique réfractaire étant intimement mélangé en un mélange de particules physique avec ladite zéolite tamis moléculaire.

4. Le catalyseur de l'une quelconque des revendications 1 à 3, dans lequel ladite zéolite tamis moléculaire est choisie dans le groupe composé d'un aluminosilicate cristallisé du type faujasite, un aluminosilicate cristallisé du type mordénite, un aluminosilicate cristallisé ZSM-5, et un métallosilicate cristallisé du type AMS.

5. Le catalyseur de l'une quelconque des revendications 1 à 3, dans lequel ladite zéolite tamis moléculaire est un élément choisi dans le groupe composé d'un matériau à base d'aluminosilicate cristallisé à grands pores, ultrastable, un aluminosilicate du type Y cristallisé, un matériau à base d'alumino-silicate du type Y échangé avec un métal de terres rares, un aluminosilicate cristallisé ZSM-5, et un borosilicate cristallisé AMS1-B.

6. Le catalyseur de l'une quelconque des revendications 1 à 5, dans lequel ledit oxyde inorganique réfractaire est une alumine catalytiquement active.

7. Le catalyseur de l'une quelconque des revendications 1 à 6, dans lequel ladite zéolite tamis moléculaire est présente en une teneur dans la gamme de 5% en poids à 90% en poids, basée sur le poids dudit support.

8. Le catalyseur de l'une quelconque des revendications 1 à 7, dans lequel ledit métal du groupe VIII est un mètal non noble présent en une teneur dans l'intervalle de 0,5% en poids à 10% en poids, calculée en oxyde du métal, ledit molybdène est présent en une teneur dans l'intervalle de 5% en poids à 25% en poids, calculée en Mo0₃, et ledit chrome est présent en une teneur dans l'intervalle de 3% en poids à 15% en poids, calculée en Cr₂0₃, chaque teneur étant basée sur le poids dudit catalyseur.

9. Le catalyseur de l'une quelconque des revendications 1 à 8, dans lequel ledit métal du groupe VIII est le nickel ou le cobalt.

10. Le catalyseur de l'une quelconque des revendications 1 à 8, dans lequel ledit métal du groupe VIII est le cobalt.

11. Le catalyseur de l'une quelconque des revendications 1 à 3 et 5 à 10, dans lequel ladite zéolite tamis moléculaire est un matériau à base d'aluminosilicate cristallisé à grands pores, ultrastable.

12. Le catalyseur de l'une quelconque des revendications 1 à 3 et 5 à 10, dans lequel ladite zéolite tamis moléculaire est un matériau à base d'aluminosilicate du type Y échangé avec un métal de terres rares.

13. Le catalyseur de l'une quelconque des revendications 1 à 3 et 5 à 10, dans lequel ladite zéolite tamis moléculaire est un aluminosilicate ZSM-5.

14. Le catalyseur de l'une quelconque des revendications 1 à 3 et 5 à 10, dans lequel ladite zéolite tamis moléculaire est un borosilicate cristallisé AMS-1 B.

15. Le catalyseur de l'une quelconque des revendications 1 à 3 et 5 à 10, dans lequel ladite zéolite tamis moléculaire est un aluminosilicate du type Y cristallisé.

16. Un procédé pour l'hydrodénitrogénation et l'hydrocraquage d'un courant d'hydrocarbure contenant une quantité substantielle de composés de l'azote, lequel procédé consiste à mettre en contact ledit courant dans une zone de réaction en présence d'hydrogène avec un catalyseur présulfuré de l'une quelconque des revendications 1 à 15, dans lequel les métaux dudit composant d'hydrogénation sont présents à l'état d'éléments comme oxydes, comme sulfures, ou comme leurs mélanges.

17. Le procédé de la revendication 16, dans lequel le courant d'hydrocarbure est choisi dans le groupe comprenant des distillats d'hydrocarbure du pétrole, des liquides dérivés du charbon, des liquides dérivés de sables à goudron, et de l'huile de schiste en totalité ou de toute fraction d'huile de schiste.

18. Un procédé pour l'hydrodénitrogénation et l'hydrocraquage d'un courant d'hydrocarbure comprenant de l'huile de schiste en totalité ou toute fraction de celle-ci pour produire des composants de carburant pour avions à réaction, lequel procédé consiste à mettre en contact ledit courant dans une zone de réaction en présence d'hydrogène avec un catalyseur présulfuré de l'une quelconque des revendications 1 à 15, dans lequel les métaux dudit composant d'hydrogénation sont présents sous la forme d'éléments, comme oxydes, comme sulfures, ou comme mélanges de ceux-ci.

19. Le procédé de l'une quelconque des revendications 16 à 18, dans lequel lesdites conditions comprennent une température dans l'intervalle de 371 °C (700°F) à 427°C (800°F), une pression dans l'intervalle de 6,890 kPa (1,000 psi) à 17,225 kPa (2.500 psi), un VSHL dans l'intervalle de 0,1 volume d'hydrocarbure par heure par volume de catalyseur à 5 volumes d'hydrocarbure par heure par volume de catalyseur, un taux d'addition de l'hydrogène ou un taux de recyclage de l'hydrogène dans l'intervalle de 359 m³/m³ (2.000 SCFB) à 3.596 m³/m³ (20.000 SCFB) et un rapport molaire hydrogène à hydrocarbure dans l'intervalle de 3 moles d'hydrogène par mole d'hydrocarbure à 60 moles d'hydrogène par mole d'hydrocarbure.

## Revendications (Revendications pour l'(les) Etat(s) contractant(s) suivant(s) : AT)

1. Un procédé pour fabriquer un catalyseur qui comprend (1) un composant d'hydrogénation comprenant le chrome, le molybdène, et au moins un métal du groupe VIII, dans lequel les métaux dudit composant d'hydrogénation sont présents sous la forme élémentaire, comme oxydes, comme sulfures ou comme des mélanges de ceux-ci et (2) un oxyde inorganique réfractaire poreux, caractérisé en ce qu'une zéolite tamis moléculaire cristallisée (3) ayant un diamètre de pores d'au moins 5 A (0,5 nm) et contentant des cations échangeables est combinée audit composant d'hydrogénation (1) et audit oxyde inorganique réfractaire poreux (2).

2. Le procédé de la revendications 1, dans lequel ledit métal du groupe VIII, ledit molybdène, et ledit chrome sont déposés sur un support comprenant ladite zéolite tamis moléculaire en suspension dans celui-ci et distribuée dans une matrice dudit oxyde inorganique réfractaire.

3. Le procédé de la revendication 1, dans lequel ledit métal du groupe VIII, ledit molybdène, et ledit chrome sont déposés sur ledit oxyde inorganique réfractaire, ledit oxyde inorganique réfractaire étant intimement mélangé dans un mélange particulaire physique avec ladite zéolite tamis moléculaire.

4. Le procédé de l'une quelconque des revendications 1 à 3, dans lequel ladite zéolite tamis moléculaire est choisie dans le groupe composé d'un aluminosilicate cristallisé du type faujasite, un aluminosilicate cristallisé du type mordénite, un aluminosilicate cristallisé ZSM-5, et un métallosilicate cristallisé du type AMS.

5. Le procédé de l'une quelconque des revendications 1 à 3, dans lequel ladite zéolite tamis moléculaire est un élément choisi dans le groupe comprenant un matériau à base d'aluminosilicate cristallisé à grands pores, ultrastable, un aluminosilicate cristallisé du type Y, un aluminosilicate du type Y échangé avec un métal de terres rares, un aluminosilicate cristallisé ZSM-5, et un borosilicate cristallisé AMS-1 B.

6. Le procédé de l'une quelconque des revendications 1 à 5, dans lequel l'oxyde inorganique réfractaire est une alumine catalytiquement active.

7. Le procédé de l'une quelconque des revendications 1 à 6, dans lequel ladite zéolite tamis moléculaire est présente en une teneur dans l'intervalle de 5% en poids à 90% en poids, basée sur le poids dudit support.

8. Le procédé de l'une quelconque des revendications 1 à 7, dans lequel ledit métal du groupe 8 est un métal non noble présent en une teneur dans l'intervalle de 0,5% en poids à 10% en poids, calculée en oxyde du métal, ledit molybdène est présenten une teneur dans l'intervalle de 5% en poids à 25% en poids, calculée en Mo0₃, et ledit chrome est présent en une teneur dans l'intervalle de 3% en poids à 15% en poids, calculée en Cr₂0₃, chaque teneur étant basée sur le poids dudit catalyseur.

9. Le procédé de l'une quelconque des revendications 1 à 8, dans lequel ledit métal du groupe VIII est le nickel ou le cobalt.

10. Le procédé de l'une quelconque des revendications 1 à 8, dans lequel ledit métal du groupe VIII est le cobalt.

11. Le procédé de l'une quelconque des revendications 1 à 3 et 5 à 10, dans lequel ladite zéolite tamis moléculaire est un matériau à base d'aluminosilicate cristallisé à grands pores, ultrastable.

12. Le procédé de l'une quelconque des revendications 1 à 3 et 5 à 10, dans lequel ladite zéolite tamis moléculaire est un matériau à base d'aluminosilicate du type Y échangée avec un métal de terres rares.

13. Le procédé de l'une quelconque des revendications 1 à 3 et 5 à 10, dans lequel ladite zéolite tamis moléculaire est un aluminosilicate ZSM-5.

14. Le procédé de l'une quelconque des revendications 1 à 3 et 5 à 10, dans lequel ladite zéolite tamis moléculaire est un borosilicate cristallisé AMS-1 B.

15. Le procédé de l'une quelconque des revendications 1 à 3 et 5 à 10, dans lequel ladite zéolite tamis moléculaire est un aluminosilicate cristallisé du type Y.

16. Un procédé pour l'hydrodénitrogénation et l'hydrocraquage d'un courant d'hydrocarbure contenant une quantité substantielle de composés de l'azote, lequel procédé consiste à mettre en contact ledit courant dans une zone de réaction en présence d'hydrogène avec un catalyseur présulfuré préparé par le procédé de l'une quelconque des revendications 1 à 15, dans lequel les métaux dudit composant d'hydrogénation sont présents sous la forme élémentaire, comme oxydes, comme sulfures ou comme leurs mélanges.

17. Le procédé de la revendication 16, dans lequel le courant d'hydrocarbure est choisi dans le groupe comprenant des distillats d'hydrocarbure du pétrole, des liquides dérivés du charbon, des liquides dérivés de sables à goudron, et de l'huile de schiste en totalité ou toute fraction d'huile de schishte.

18. Un procédé pour l'hydrodénitrogénation et l'hydrocraquage d'un courant d'hydrocarbure comprenant de l'huile de schiste en totalité ou toute fraction de celle-ci pour produire des composants de carburant pour avions à réaction, lequel procédé consiste à mettre en contact ledit courant dans une zone de réaction en présence d'hydrogène avec un catalyseur présulfuré préparé par le procédé de l'une quelconque des revendications 1 à 15, dans lequel les métaux dudit composant d'hydrogénation sont présents sous la forme élémentaire, comme oxydes, comme sulfures, ou comme des mélanges de ceux-ci.

19. Le procédé de l'une quelconque des revendications 16 à 18, dans lequel lesdites conditions comprenent une température dans l'intervalle de 371 °C (700°F) à 427°C (800°F), une pression dans l'intervalle de 6,890 kPa (1.000 psi) à 17,225 kPa (2.500 psi), un VSHL dans l'intervalle de 0,1 volume d'hydrocarbure par heure par volume de catalyseur à 5 volumes d'hydrocarbure par heure par volume de catalyseur, un taux d'addition de l'hydrogène ou un taux de recyclage de l'hydrogène dans l'intervalle de 359 m³/m³ (2.000 SCFB) à 3.596 m³/m³ (20.000 SCFB), et un rapport molaire hydrogène à hydrocarbure dans l'intervalle de 3 moles d'hydrogène par mole d'hydrocarbure à 60 moles d'hydrogène par mole d'hydrocarbure.
